# EUROPEAN PATENT APPLICATION

(11) **EP 1 890 403 A2**
(43) Date of publication of application: **20.02.2008**
(21) Application number: 07108188.9
(22) Date of filing: 14.05.2007
(51) Int. Cl.: H04B 7/26

(54) **Radio relay communication method, radio base station and radio relay station in radio communication system**

(30) Priority: 17.08.2006 JP 2006222703; 25.10.2006 JP 2006290000
(71) Applicant: Fujitsu Ltd., Kawasaki-shi, Kanagawa 211-8588 (JP)
(72) Inventor: Nakatsugawa, Keiichi, c/o Fujitsu Limited, Kawasaki-shi, Kanagawa 211-8588 (JP)
(74) Representative: Wilding, Frances Ward

(57) **Abstract**

Correct reception of messages and data by a mobile station (3) or radio base station (1) is enabled in a planned timing by adjusting a receiving or transmit timing in consideration of a time (an occurrence of a time lag) required for relay processing in a radio relay station (2) within a radio communication system.

For that purpose, time lag information related to a relay delay due to relay processing in the radio relay station (1) is set to the radio base station (1), the receiving timing of the mobile station (3) is determined based on the time lag information , and the transmit timing of the radio base station (1) or the receiving timing of the mobile station (3) is controlled according to the determined receiving timing.

## Description

### CROSS REFERENCE TO RELATED APPLICATION(S)

This application is based on and hereby claims priority to two Japanese Applications No. 2006-222703 filed on August 17, 2006 and No. 2006-290000 filed on October 25, 2006 in Japan, the contents of which are hereby incorporated by reference.

### BACKGROUND OF THE INVENTION

### (1) Field of the Invention

The present invention relates to a radio relay communication method, a radio base station, and a radio relay station in a radio communication system.

### (2) Description of Related Art

In recent years, a technology called WiMAX (Worldwide Interoperability for Microwave Access) has attracted attention as one of radio communications technologies. WiMAX is a technology developed as a technique to construct Wireless MAN by making a communication operator and user homes connectable by radio instead of telephone lines or optical fiber lines and making a MAN (Metropolitan Area Network) wireless, which is a wide area network mutually connecting LAN (Local Area Network) in urban areas or specific regions, and WiMAX is capable of covering an area within a radius of about 50 km at a transmission speed of up to 70 Mbps with one radio base station.

Currently, for example, IEEE Standard 802.16-2004 (2004-10-01) and IEEE Standard 802.16-2004/Cor1/D5 (2005-09-12) have been standardized by IEEE as WiMAX for fixed terminals, and IEEE Standard 802.16e/D12 (2005-10-14) has been standardized as WiMAX for mobile terminals.

In a radio communication system such as WiMAX, communication is generally performed between a radio base station connected to an upper network by a wire link and a wireless terminal (hereinafter referred to simply as a "terminal"), but by introducing a radio relay station between the radio base station and terminal for performing radio relay transfer, it becomes possible to expand communication areas and to improve communication throughput of terminals.

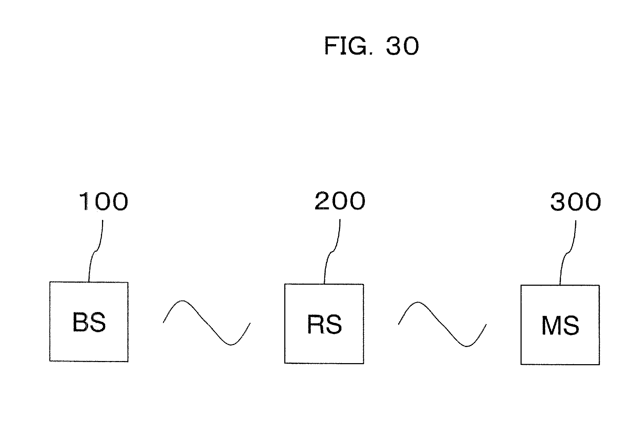

FIG. 30 shows an overview of a radio communication system for performing radio relay communication for mobile terminals.

The radio communication system shown in FIG. 30 is comprised of a radio base station (BS) 100, a radio relay station (RS) 200, and a mobile station (MS) 300. The RS 200 corresponds to a mobile station in relation to the BS 100 and operates as a radio base station in relation to the MS 300, and temporarily receives a radio signal transmitted by the BS 100 or MS 300 and, after performing necessary processing, transmits the signal to the MS 300 or BS 100. In addition to a one stage connection in which a signal passes through one RS 200 between BS100 or MS 300 as shown in FIG. 30, a multi-stage (series) connection in which a signal passes through two or more units of RS 200 can be considered.

A relay communication method in such a radio communication system for mobile terminals is currently being standardized in IEEE802.16j as a mobile multi-hop relay (MMR).

However, such radio relay communication has problems described below.

It is anticipated that it takes a certain time for the RS 200, after temporarily receiving a radio frame, to retransmit the radio frame. This depends on a relay processing method in the RS 200 but, for example, performing processing described below can be considered for WiMAX.

That is, the RS 200 first analyzes a downlink map (DL-MAP) assigned to a received frame [OFDMA (Orthogonal Frequency Division Multiplexing Access) frame], identifies each burst in a downlink sub-frame, and extracts messages and data addressed to each MS 300 mapped in bursts by decoding.

Next, the RS 200 selects the MS 300 to which the extracted messages and data should be communicated via the RS 200, plans a schedule of the extracted messages and data for the selected MS 300, creates bursts, encodes the messages and data, and transmits extracted messages and data as new transmission frames for a relay.

The time required for processing described above depends on a processing speed of the RS 200 and it will take a time of one to several frames. This means that a message or data transmitted from the BS 100 to the MS 300 arrives at the MS 300 after a delay of several frames because it passes through the RS 200. This causes problems described below.

Certain types of message and data must be transmitted or received between BS 100 and MS 300 in a prearranged timing. Here, the timing may include not only a point of time or frame at which transmission or reception of the message or data is planned, but also an interval designated by a certain range of time or frame. Such timings for transmission or reception may repeatedly be planned in a certain period (window, period) from a start point.

For example, when WiMAX is in an idle mode, the MS 300 in an idle state returns to a receiving state of a MOB_PAG_ADV (Mobile Paging Advertisement) message, which is a call signal from the BS 100, in a period called Paging Cycle. An interval for receiving the MOB_PAG_ADV message is called Paging Listening Interval and a fixed period such as 1 to 5 frames is designated. The timing for starting Paging Listening Interval is determined based on calculation from a Paging Offset value and a frame number. The MS 300 must be notified of such Paging Listening Interval and the Paging Offset values from the BS 100 so that the BS 100 and the MS 300 manage these start frame, period, and interval in the same timing.

However, if the RS 200 is present between BS 100 and MS 300 like the MMR, there is a time lag of several frames, as described above. Thus, a transmit timing or receiving timing of messages and data managed separately by the BS 100 and MS 300 is shifted and messages and data do not arrive at the BS 100 or MS 300 in planned receiving timings, leading to a reception failure.

If a planned receiving timing or a start point of a period is designated by the frame number, offset value or the like, the frame number of a frame transmitted by the BS 100 and a frame relay-transmitted by the RS 200 may be set independently. In such cases, the planned receiving timing at the MS 300 assumed by the BS 100 and the planned receiving timing calculated by the MS 300 based on instructions from the BS 100 indicate quite different points of time, leading to a reception failure of messages and data.

If such a reception failure occurs, transmission/reception of redundant control messages or the like by retransmission control such as HARQ (Hybrid Automatic Repeat reQuest) increases, leading to lower utilization efficiency of radio resources and deterioration of communication quality such as lower throughput.

Problems that occur when receiving messages and data at the MS 300 (that is, for a downstream link) also occur for an uplink when transmitting messages and data in a certain transmit timing from the MS 300 to the BS 100.

### SUMMARY OF THE INVENTION

The present invention has been developed in view of the above problems and an obj ect thereof is to enable correct reception of messages and data in a planned timing at a mobile station or radio base station when the radio base station and the mobile station perform communication via a radio relay station in a radio communication system by adjusting, in consideration of a time required for relay processing (an occurrence of a time lag) in the radio relay station, receiving or transmit timings of messages and data managed separately by the radio base station (or the radio relay station) and the mobile station.

To accomplish the above object, the present invention is
characterized in that radio relay communication methods, radio base stations, and radio relay stations in a radio communication system described below are used: That is
(1) A radio relay communication method in a radio communication system according to the present invention having a radio base station, a mobile station, and a radio relay station relaying communication between the radio base station and the mobile station comprises the steps of: setting time lag information related to a relay delay due to relay processing in the radio relay station to the radio base station; determining a receiving timing of the mobile station based on the time lag information; and controlling a transmit timing of the radio base station or the receiving timing of the mobile station according to the receiving timing determined in the determination step.
(2) A radio relay communication method in a radio communication system according to the present invention having a radio base station, a mobile station, and a radio relay station relaying communication between the radio base station and the mobile station comprises the steps of: setting time lag information related to a relay delay due to relay processing in the radio relay station; determining a transmit timing of the mobile station based on the time lag information; and controlling a receiving timing of the radio base station or the transmit timing of the mobile station according to the transmit timing determined in the determination step.
(3) Further, a radio relay communication method in a radio communication system according to the present invention having a radio base station, a mobile station, and a radio relay station relaying communication between the radio base station and the mobile station comprises the steps of: receiving a radio frame transmitted by the radio base station, another radio relay station, or the mobile station; detecting a frame number of the radio frame received in the reception step; generating a radio frame to which the frame number detected in the detection step is set; and relay-transmitting the radio frame generated in the frame generation step.
(4) A radio relay communication method in a radio communication system according to the present invention having a radio base station, a mobile station, and a radio relay station relaying communication between the radio base station and the mobile station comprises the steps of: setting time lag information related to a relay delay due to relay processing in the radio relay station; determining a transmit timing of the radio relay station based on the time lag information; notifying the radio relay station of the transmit timing determined in the determination step; relay-transmitting by the radio relay station according to the transmit timing notified in the notification step.
(5) The radio relay station may receive a notification in the notification step in response to the inquiry about the transmit timing made to the radio base station.
(6) Further, a radio base station in a radio communication system according to the present invention having a radio base station, a mobile station, and a radio relay station relaying communication between the radio base station and the mobile station comprises: a retention means retaining time lag information related to a relay delay due to relay processing in the radio relay station; a determination means determining a receiving timing of the mobile station based on the time lag information retained by the retention means; and a timing control means controlling a transmit timing of a local station or the receiving timing of the mobile station according to the receiving timing determined by the determination means.
(7) A radio base station in a radio communication system according to the present invention having a radio base station, a mobile station, and a radio relay station relaying communication between the radio base station and the mobile station comprises: a retention means retaining time lag information related to a relay delay due to relay processing in the radio relay station; a determination means determining a transmit timing of the mobile station based on the time lag information retained by the retention means; and a timing control means controlling a receiving timing of a local station or the transmit timing of the mobile station according to the transmit timing determined by the determination means.
(8) A radio relay station in a radio communication system having a radio base station, a mobile station, and a radio relay station relaying communication between the radio base station and the mobile station, comprises: a reception means receiving a radio frame transmitted by the radio base station, another radio relay station, or the mobile station; a detection means detecting a frame number of the radio frame received by the reception means; a generation means generating a radio frame to which the frame number detected in the detection means is set; and a transmission means relay-transmitting the radio frame generated by the frame generation means.
(9) A radio relay station in a radio communication system according to the present invention having a radio base station, a mobile station, and a radio relay station relaying communication between the radio base station and the mobile station in which a plurality of the radio relay stations are connected in series by radio between the radio base station and the mobile station, comprises a retention means retaining a cumulative value of the time lag information of other radio relay stations to a side of the mobile station from a local station.
(10) The radio relay station in a radio communication system may further comprises a notification means notifying the radio base station or other radio relay stations on the side of the radio base station from the local station of the cumulative value of the time lag information.
(11) The radio relay station in a radio communication system may further comprises: a request means making an inquiry about the cumulative value of the time lag information to other radio relay stations on the side of the mobile station from the local station, wherein the cumulative value of the time lag information notified in response to the inquiry by the request means is retained in the retention means.
(12) Further, a radio relay station in a radio communication system according to the present invention having a radio base station, a mobile station, and a radio relay station relaying communication between the radio base station and the mobile station comprises: a reception means receiving a notification of a transmit timing for a local station determined by the radio base station based on time lag information related to a relay delay due to relay processing in the local station; and a transmission means relay-transmitting according to the transmit timing received by the reception means.
(13) A radio base station in a radio communication system according to the present invention having a radio base station, a mobile station, and a radio relay station relaying communication between the radio base station and the mobile station comprises: a retention means retaining time lag information related tea relay delay due to relay processing in the radio relay station; a determination means determining a transmit timing of the radio relay station based on the time lag information retained by the retention means; and a notification means notifying the radio relay station of the transmit timing determined by the determination means to cause the radio relay station to relay-transmit according to the transmit timing determined by the determination means.
(14) The determination means may determine the transmit timing upon receiving an inquiry about the transmit timing from the radio relay station.
(15) A radio relay communication method in a radio communication system according to the present invention having a radio base station, a mobile station, and a radio relay station relaying communication between the radio base station and the mobile station comprises the steps of: setting time lag information related to a relay delay due to relay processing in the radio relay station to the radio base station; determining a relay receiving timing in the mobile station communicating with the radio base station via the radio relay station based on the time lag information and also a direct receiving timing in the mobile station communicating directly with the radio base station; and controlling a transmit timing of messages to be received by the mobile station based on each of the receiving timings determined in the determination step.
(16) Here, in the determination step, after determining the relay receiving timing for mobile stations communicating via the radio relay station, the direct receiving timing may be determined for mobile stations when a transition to a state occurs in which the mobile station can directly communicate with the radio base station, and in the control step, the transmit timing of the messages may be controlled based on each of the receiving timings.
(17) Next, a radio base station in a radio communication system according to the present invention having a radio base station, a mobile station, and a radio relay station relaying communication between the radio base station and the mobile station comprises: a setting means setting time lag information related to a relay delay due to relay processing in the radio relay station to the radio base station; a determination means determining a relay receiving timing in the mobile station communicating with the radio base station via the radio relay station based on the time lag information and also a direct receiving timing in the mobile station communicating directly with the radio base station; and a control means controlling a transmit timing of messages to be received by the mobile station based on each of the receiving timings determined in the determination step.
(18) Here, it is preferable that the determination means determines, after determining the relay receiving timing for mobile stations communicating via the radio relay station, the direct receiving timing for mobile stations when a transition to a state occurs in which the mobile station can directly communicate with the radio base station, and the control means controls the transmit timing of the messages based on each of the receiving timings determined in the determination step.

According to the present invention described above, at least one of effects or advantages described below will be obtained:
(1) By controlling (adjusting) a transmit timing of a radio base station or a receiving timing of a mobile station (or, a receiving timing of a radio base station or a transmit timing of a mobile station) according to the receiving (or transmit) timing in the mobile station determined based on the time lag information in a radio relay station, a receiving timing shift in the radio base station or mobile station accompanying a relay delay caused by passing through the radio relay station can be absorbed to improve a ratio of successful reception. Therefore, communication quality can be ensured while a utilization efficiency of radio resources can be improved by reducing redundant control messages or the like by retransmission control or the like when reception fails.
(2) Since it becomes possible to synchronize a frame number of a frame transmitted from a radio base station and that of a frame relay-transmitted from a radio relay station, correct receiving or transmit timing control can be realized even when the receiving or transmit timing is determined based on the frame number.
(3) Since a timing of relay-transmission of a radio relay station can be controlled by a radio base station that determines a transmit timing of the radio relay station based on the time lag information and notifies the radio relay station of the transmission timing, if, for example, a plurality of radio relay stations are connected to the radio base station in parallel, the transmit timing of each radio relay station can be made to match so that a mobile station can receive a signal of the same content without interruption after one transmission from the radio base station to each radio relay station even if the mobile station changes the connected radio relay station as the mobile station moves.
(4) Since a receiving timing of a mobile station communicating with a radio base station via a radio relay station is determined in consideration or a time lag in the radio relay station and that of a mobile station communicating directly with the radio base station is determined, and based on each of the receiving timings, a transmit timing of messages to be received by the mobile station is controlled, the mobile station can be made to receive necessary messages even when a state transition of the mobile station occurs between a state in which the mobile station communicates with the radio base station via the radio relay station and that in which the mobile station communicates directly with the radio base station as the mobile station moves.

The above and other objects and features of the present invention will be understood by reading carefully the following description with accompanying drawings. Preferred embodiments of the present invention will be described inmore detail referring to the accompanying drawings. The drawings are illustrative and are not to be limitative of the scope of the present invention.

### BRIEF DESCRIPTION OF THE DRAWINGS

FIG. 1 is a block diagram illustrating a radio communication system according to an embodiment of the present invention;
FIG. 2 is a block diagram showing the configuration of principal parts of a radio base station (BS) shown in FIG. 1;
FIG. 3 is a block diagram showing the configuration of principal parts of a radio relay station (RS) shown in FIG. 1;
FIG. 4 is a sequence diagram illustrating a radio relay communication method (transmit timing adjustments of the BS) in the radio communication system shown in FIG. 1;
FIG. 5 is a sequence diagram illustrating a radio relay communication method (receiving timing adjustments of the BS) in the radio communication system shown in FIG. 1;
FIG. 6 is a sequence diagram illustrating a radio relay communication method (frame number synchronization) in the radio communication system shown in FIG. 1;
FIG. 7 is a sequence diagram illustrating a first concrete example of transmit timing adjustments of the BS shown in FIG. 4.
FIG. 8 is a sequence diagram illustrating a second concrete example of the transmit timing adjustments of the BS shown in FIG. 4;
FIG. 9 is a sequence diagram illustrating a concrete example of receiving timing adjustments of the BS shown in FIG. 5;
FIG. 10 is a schematic diagram showing an example of a receiving environment of a MS (when messages or data from the BS arrives at the MS directly.) shown in FIG. 1;
FIG. 11 is a sequence diagram illustrating the transmit timing adjustments of the BS in an environment shown in FIG. 10;
FIG. 12 is a sequence diagram illustrating the receiving timing adjustments of the BS in the environment shown in FIG. 10;
FIG. 13 is a block diagram showing a radio communication system in which a plurality of the RSs shown in FIGS. 1 and 3 are connected in multiple stages (series);
FIG. 14 is a diagram illustrating an example of a time lag information setting in the radio communication system shown in FIG. 13;
FIG. 15 is a diagram illustrating an example of a time lag information setting in the radio communication system shown in FIG. 13;
FIG. 16 is a sequence diagram illustrating a method of setting the time lag information shown in FIG. 15;
FIG. 17 is a sequence diagram illustrating another method of setting the time lag information shown in FIG. 15;
FIG. 18 is a sequence diagram illustrating still another method of setting the time lag information shown in FIG. 15;
FIG. 19 is a sequence diagram illustrating a radio relay communication method (transmit timing adjustments of the RS) in the radio communication system shown in FIG. 1;
FIG. 20 is a block diagram showing a radio communication system in which a plurality of RSs are connected to the BS to illustrate an application example of the transmit timing adjustments shown in FIG. 19;
FIG. 21 is a time chart illustrating broadcast transmit timing adjustments in the radio communication system shown in FIG. 20;
FIG. 22 is a time chart illustrating broadcast transmit timing adjustments in the radio communication system shown in FIG. 20;
FIG. 23 is a schematic diagram showing a radio communication environment for illustrating advantageous effects by the transmit timing adjustments shown in FIGS. 21 and 22;
FIG. 24 is a diagram schematically showing how the MS moves between the BS and RS;
FIG. 25 is a diagram for illustrating transmit timing control (if Paging Listening Interval is longer than a time lag in the RS) in the BS in response to movements of the MS shown in FIG. 24;
FIG. 26 is a diagram for illustrating transmit timing control (if Paging Listening Interval is as long as the time lag in the RS) in the BS in response to movements of the MS shown in FIG. 24;
FIG. 27 is a diagram for illustrating transmit timing control (if Paging Listening Interval is longer than the time lag in the RS) in the MS in response to movements of the MS shown in FIG. 24;
FIG. 28 is a diagram for illustrating transmit timing control (if Paging Listening Interval is twice as long as the time lag in the RS) in the MS in response to movements of the MS shown in FIG. 24;
FIG. 29 is a diagram for illustrating transmit timing control (if Paging Listening Interval is as long as the time lag in the RS) in the MS in response to movements of the MS shown in FIG. 24; and
FIG. 30 is a block diagram illustrating an example of a radio communication system.

### DESCRIPTION OF THE PREFERRED EMBODIMENTS

An embodiment of the present invention will be described below in detail with reference to drawings . It is needless to say that the present invention is not limited to the embodiment and can be carried out in various modifications without departing from the spirit of the present invention.

### [A] Description of an embodiment

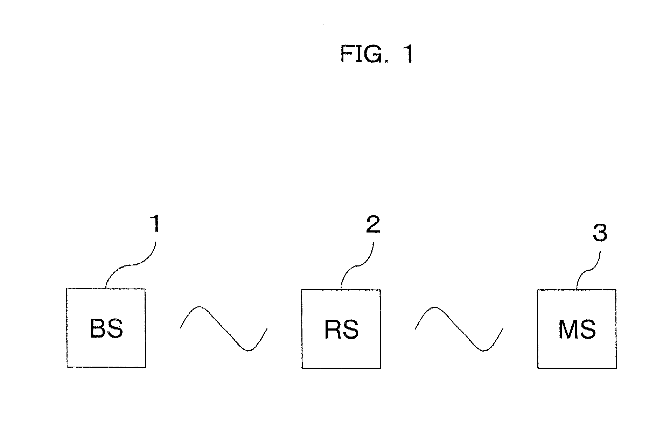

FIG. 1 is a block diagram showing the configuration of a radio communication system according to an embodiment of the present invention, and the radio communication system shown in FIG. 1 is comprised of a radio base station (BS) 1, a mobile station (MS) 3 as a wireless terminal equipped with a radio communication function such as a mobile phone and laptop PC, and a radio relay station (RS) 2 disposed between the BS 1 and MS 3. In the present embodiment, the RS 2 corresponds to a mobile station in relation to the BS 1 and operates as a radio base station in relation to the MS 3, and temporarily receives a radio (RF) signal transmitted by the BS 1 or MS 3 and, after performing necessary processing (relay processing), transmits the signal to the MS 3 or BS 1.

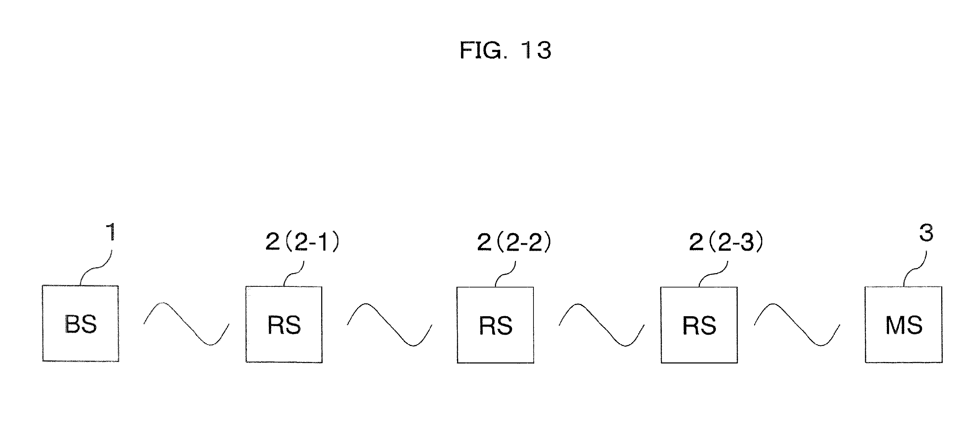

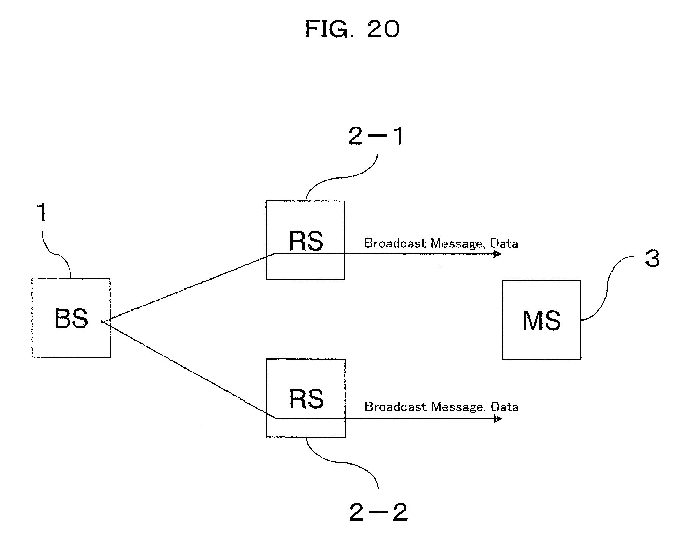

Though the BS 1, RS 2, and MS 3 are each shown in FIG. 1 as a single unit, but two or more units may be present for each. In addition to a configuration in which a radio signal passes through only one unit of RS 2 between the BS 1 and the MS 3, as shown in FIG. 1, another configuration in which two or more units of RS 2 are connected in series (multi-hop connection) by radio, as will be described with reference to FIG. 13, and a still another configuration in which two or more units of RS 2 are connected to one unit of BS 1 in parallel by radio, as will be described with reference to FIG. 20, can be considered.

Further, it is assumed in the present embodiment that communication of a downlink and an uplink is performed between BS 1 and RS 2 and between RS 2 and MS 3 by a communication method conforming, for example, to WiMAX, that is, radio frames (hereinafter also referred to simply as "frames") in a predetermined format in an OFDM (Orthogonal Frequency Division Multiplexing) system or OFDMA (Orthogonal Frequency Division Multiplexing Access) system, and also that a system configuration in which receiving or transmit timings of control messages and user data (hereinafter also referred to simply as "messages" and "data" respectively) in the MS3 are designated (managed) by the BS 1 (or the RS 2).

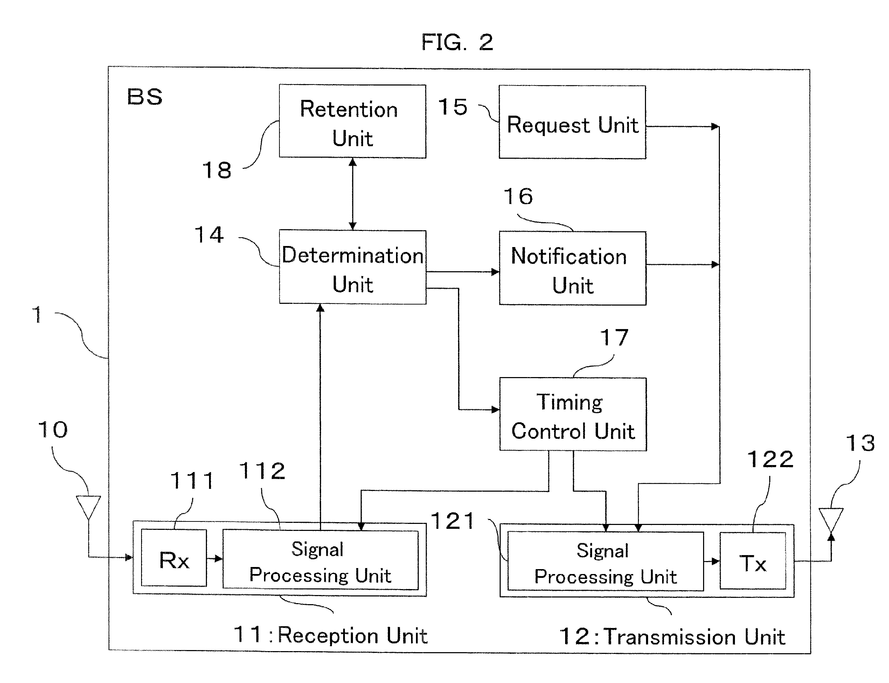

The BS 1 is comprised of, if focused on principal parts thereof, as shown in FIG. 2, a receiving antenna 10, a reception unit 11, a transmission unit 12, a transmitting antenna 13, a determination unit 14, a request unit 15, a notification unit 16, a timing control unit 17, and a retention unit 18.

Here, the receiving antenna 10 is used to receive RF signals (such as messages and data) from the RS 2, MS 3, or another BS 1 and the reception unit 11 is used to perform necessary reception processing of the RF signals received by the receiving antenna 10. Thus, the reception unit 11 is comprised of, for example, a radio (RF) receiver (Rx) 111 and a signal processing unit 112. The RF receiver 111 is used to perform necessary radio reception processing including a frequency conversion to a base-band frequency (down-convert) and an AD (Analog to Digital) conversion to a digital signal for digital signal processing of the RF signals received by the receiving antenna 10, and the signal processing unit 112 is used to perform necessary digital signal processing including at least demodulation processing and decoding processing of the base band digital signal obtained from the RF receiver 111.

The transmission unit 12 is used to generate a transmission signal in the downstream link addressed to the MS 3 and is comprised of, for example, a signal processing unit 121 and a radio (RF) transmitter (Tx) 122. The signal processing unit 121 is used to perform necessary digital signal processing including encoding (error correcting encoding of convolutional code, turbo code and the like) processing of signals (such as messages and data) to be transmitted to the MS 3, generation processing of a transmission frame (an OFDM frame, OFDMA frame or the like) in a predetermined format, and modulation processing by QPSK, 16QAM and the like, and the RF transmitter 122 is used to perform necessary radio transmission processing including a DA (Digital to Analog) conversion to an analog signal and a frequency conversion to a transmission RF signal (up-convert) of the transmission signal (digital base band signal) obtained from the signal processing unit 121.

The transmitting antenna 13 is used to radiate out into space a transmission signal obtained by the transmission unit 12 toward the RS 2, MS 3, or another BS 1.

The retention unit 18 is used to retain information (time lag information) about a relay delay (time lag) of messages or data caused at least when performing relay processing in the RS 2, and the time lag information may be set externally from a maintenance (operator) terminal or the like or the time lag information notified from the RS 2 may be retained via the reception unit 11 and determination unit 14.

The determination unit 14 is used to determine (manage), based on the time lag information in the RS 2, the receiving or transmit timing of messages and data of the MS 3, and the transmit timing of the RS 2 to the MS 3.

The request unit 15 is used to make an inquiry to the RS 2 via the transmission unit 12 to obtain at least time lag information of the RS 2 and, for example, when the BS 1 is started, a signal (frame) including information in accordance with inquiry content is generated by the signal processing unit 121 before being transmitted from the transmitting antenna 13 as an inquiry message (control message). A response (time lag information) from the RS 2, to which an inquiry is made, is received by the receiving antenna 10 and detected by the reception unit 11 (signal processing unit 112) before being set to (retained in) the retention unit 18. If the time lag information is statically set to the BS 1 (retention unit 18) from an operator terminal or the like, the function of the request unit 15 becomes unnecessary.

The notification unit 16 is used to generate information of which a notification is to be made to the MS 3 or RS 2, and a signal (frame) including information in accordance with notification content thereof is generated by the signal processing unit 121 before being transmitted from he transmitting antenna 13 as various notification messages (control messages). Notification messages include messages to notify the MS 3 of a receiving or transmit timing of messages or data in the MS 3 determined by the determination unit 14 and messages to notify the RS 2 of a transmit timing of the RS 2 determined by the determination unit 14.

Then, the timing control unit 17 is used to adjust (control) a transmit (or receiving) timing of messages and data addressed to the MS 3 or BS 1 by controlling processing of the transmission unit 12 (signal processing unit 121) [or the reception unit 11 (signal processing unit 112)] according to the receiving (or transmit) timing of the MS 3 determined (adjusted) by the determination unit 14 based on time lag information in the RS 2, more specifically, the receiving (or transmit) timing managed by advancing (or delaying) by a time corresponding to a time lag due to relay processing in the RS 2.

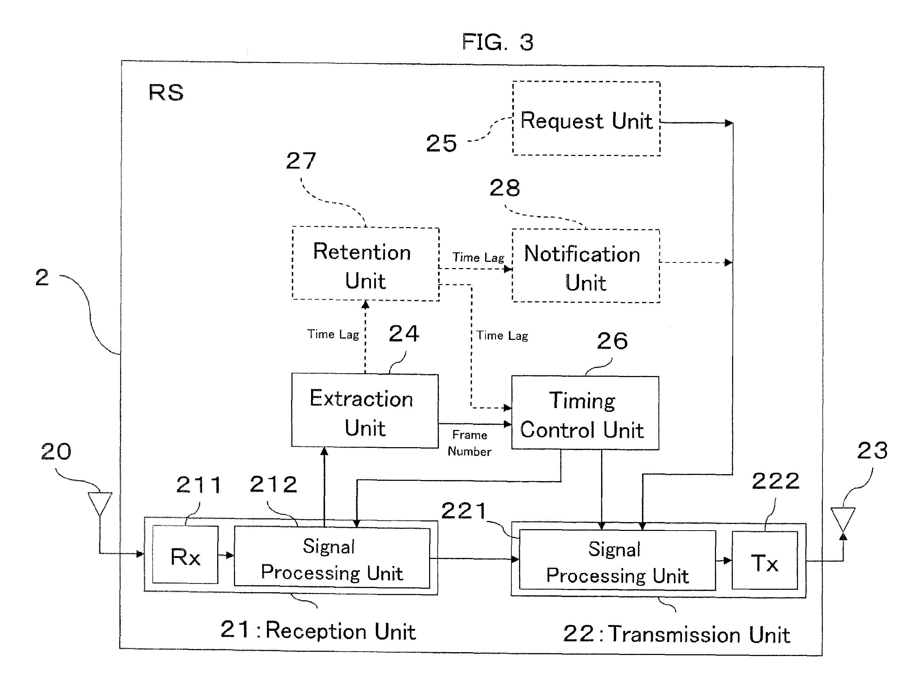

The RS 2 in the present invention is comprised of, if focused on principal parts thereof, as shown in FIG. 3, a receiving antenna 20, a reception unit 21, a transmission unit 22, a transmitting antenna 23, an extraction unit 24, a request unit 25, a timing control unit 26, a retention unit 27, and a notification unit 28.

Here, the receiving antenna 20 is used to receive an RF signal from the BS 1, MS 3, or another RS 2, and the reception unit 21 is used to perform reception processing of the RF signal received by the receiving antenna 20.

Thus, the reception unit 21 is comprised of, for example, an RF receiver (Rx) 211 and a signal processing unit 212. Like the RF receiver in the BS 1, the RF receiver 211 is used to perform necessary radio reception processing including a frequency conversion to a base-band frequency (down-convert) and an AD conversion to a digital signal for digital signal processing of the RF signals received by the receiving antenna 20.

The signal process ing unit 212 is used to perform necessary digital signal processing including at least demodulation processing and decoding processing of the base band digital signal obtained from the RF receiver 211, and the signal after the signal processing is input into the transmission unit 22 (signal processing unit 2218 relaying to the MS 3.

The transmission unit 22 is used to generate a transmission signal addressed to the MS 3, BS 1 or another RS 2 and is comprised of, for example, a signal processing unit 221 and an RF transmitter (Tx) 222. The signal processing unit 221 is used to perform necessary digital signal processing including encoding (error correcting encoding of convolutional code, turbo code and the like) processing of signals (such as messages and data) to be transmitted to the MS 3 or BS 1, generation processing of a transmission frame (an OFDM frame, OFDMA frame or the like) in a predetermined format, and modulation processing by QPSK, 16QAM and the like, and the RF transmitter 222 is used to perform necessary radio transmission processing including a DA (Digital to Analog) conversion to an analog signal and a frequency conversion to a transmission RF signal (up-convert) of the transmission signal (digital base band signal) obtained from the signal processing unit 221.

The transmitting antenna 23 is used to radiate out into space a transmission signal obtained by the transmission unit 22 toward the MS 3, BS 1 or another RS 2.

The extraction unit 24 is equipped with a function to extract (detect) the frame number (which is set to the DL-MAP for an OFDMA frame) set to a transmission frame from the BS 1 or another RS 2 processed by the reception unit 21 (signal processing unit 212) and time lag information. The request unit 25 is used to make an inquiry to other RS 2 via the transmission unit 22 to obtain time lag information of the other RS 2 and, for example, when the RS 2 is started, a signal (frame) including information in accordance with inquiry content is generated by the signal processing unit 221 before being transmitted from the transmitting antenna 23 as an inquiry message (control message) . A response time lag information) from a destination to which an inquiry is made, is received by the receiving antenna 20 and extracted by the extraction unit 24 via the reception unit 21 before being retained in the retention unit 27.

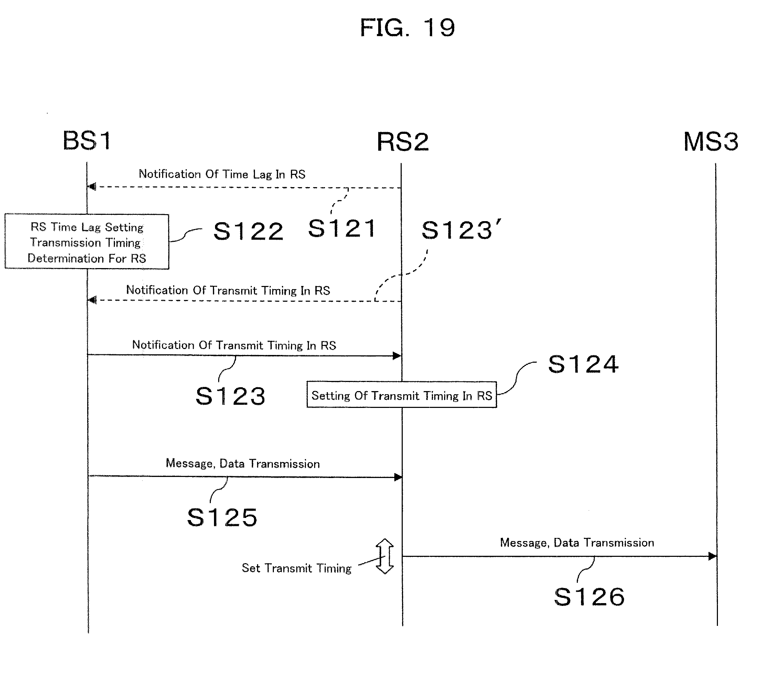

The timing control unit 26 is equipped with a function to determine and manage a receiving or transmit timing of messages and data in the MS 3 or another RS 2 based on the time lag information retained in the retention unit 27 and to control processing of the transmission unit 22 (signal processing unit 221) or reception unit 21 (signal processing unit 212), and that to control the transmission unit 22 (signal processing unit 221) to set the frame number extracted by the extraction unit 24 to a transmission frame of the RS 2 so that transmission frame from the BS 1 and that of the RS 2 can be synchronized. As will be described with reference to FIGS. 19 to 23, for example, if the transmit timing of messages and data needs to be adjusted in the RS 2, the transmit timing of transmission frames of the transmission unit 22 (signal processing unit 221) is controlled.

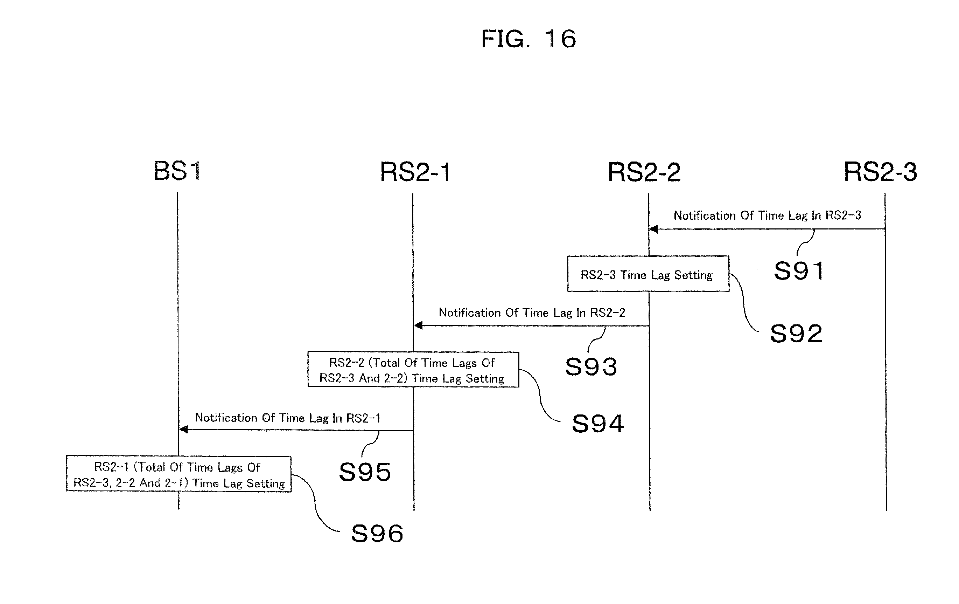

The retention unit 27 is used to retain time lag information (described later with reference to FIGS . 15 to 18) of other RS 2 extracted by the extraction unit 24, and the notification unit 28 is used to generate information of which a notification is to be made to the MS 3, BS 1 or other RS 2 and a signal (frame) including information in accordance with notification content thereof is generated by the signal processing unit 221 before being transmitted from the transmitting antenna 23 as notification messages (control messages). Notification messages include, as will be described with reference to FIGS. 16 to 18, messages to notify other RS 2 or the BS 1 via the transmission unit 22 of time lag information of the RS 2 or other RS 2, or a cumulative value thereof retained by the retention unit 27.

Meanwhile, if the time lag information of all RS 2 is statically set to the BS 1 (determination unit 14) by an operator or the like, all or part of functions of the request unit 25, retention unit 27, and notification unit 28 becomes unnecessary.

An operation (relay communication method) of the radio communication system in the present embodiment configured as described above will be described below.

### (A1) Overview

In the BS 1, time lag information when passing through the RS 2 is retained in (set to) the retention unit 18. Methods for retaining the time lag information that can be considered include: (1) setting as static information in advance, (2) time lag information of the RS 2 notified autonomously when, for example, the RS 2 is started, is set in the BS 1, and (3) time lag information notified from the RS 2 when an inquiry about the time lag information is made from the BS 1 to the RS 2 is set. For (2) and (3), the time lag information is not static information and can be provided as a result (dynamic information) of measuring a time required for the RS 2 to perform actual relay processing.

In the BS 1, a receiving (or transmit) timing of the MS 3 is determined by the determination unit 14 based on a parameter about the receiving (or transmit) timing desired by the MS 3 or a timing conforming to a control algorithm or the like of the BS 1 itself. The determined timing is from the BS 1 to the MS 3 as a control message or the like from the notification unit 16 via the transmission unit 12, and based on the notified timing, the MS 3 manages the receiving (or transmit) timing of the MS 3 such as a start time or frame, an interval, and period. The interval may refer to only one point of time or one frame in a period or a range extending over a certain time or a plurality of frames. If the interval extends over a certain time or a plurality of frames, a plurality of messages or a plurality of pieces of data may be received within the interval. Parameters designated (reported) from the BS 1 such as the start time or frame, interval, and period can be changed as needed (for example, an amount of transmission data to the MS 3 is changed to be variable).

However, if the timing reported to the MS 3 is managed in the BS 1 without performing any adjustment, the problems described in the previous technologies occur. Thus, when managing the receiving (or transmit) timing of the MS 3 in the BS1, timing adjustments (control) are performed in consideration of a time lag in the RS 2.

### (A2) Adjustment/management of the receiving timing of the MS 3

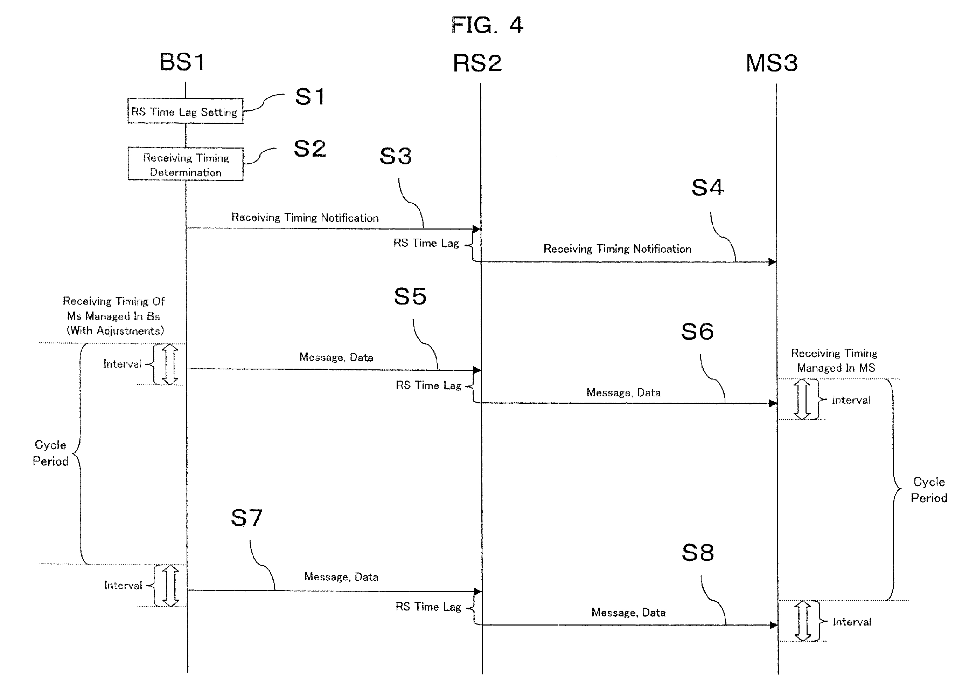

FIG. 4 shows how the receiving timing of the MS 3 is adjusted and managed in the BS 1.

In the BS 1, time lag information in the RS 2 is set (step S1), as described above, and the receiving timing (such as the interval and repeating period) of the MS 3 is determined based on the time lag information and managed (step S2). That is, the receiving timing of the MS 3 managed in the BS 1 is managed as a timing advanced by a time corresponding to a time lag due to relay processing in the RS 2 so that messages and data to be transmitted to the MS 3 correctly arrive in the receiving timing (such as the interval and repeating period) managed in the MS 3.

Then, the BS1 transmits information (receiving timing before adjustments) designating the receiving timing of the MS in a predetermined notification message or the like (step S3). The notification message is transmitted, similarly to other messages and data addressed to the MS 3, to the MS 3 by adding ; time lag for a time required for relay processing in the RS 2 (step S4).

In the MS 3, the receiving timing (such as the interval and repeating period) of the MS 3 is managed in the designated timing by receiving the notification message. That is, the MS 3 will manage the receiving timing of the MS 3, which lags behind that managed in the BS 1 by a time corresponding to the time lag.

Subsequently, the BS 1 causes the timing control unit 17 to control the transmit timing of messages and data addressed to the MS 3 based on the receiving timing of the MS 3 managed in the BS 1 after the timing adjustments. Accordingly, messages and data transmitted from the BS 1 (steps S5 and S7) will be correctly received within an interval planned (managed) by the MS 3 even if a time lag is caused by passing through the RS 2 (steps S6 and S8).

### (A3) Adjustment/management of the transmit timing of the MS 3

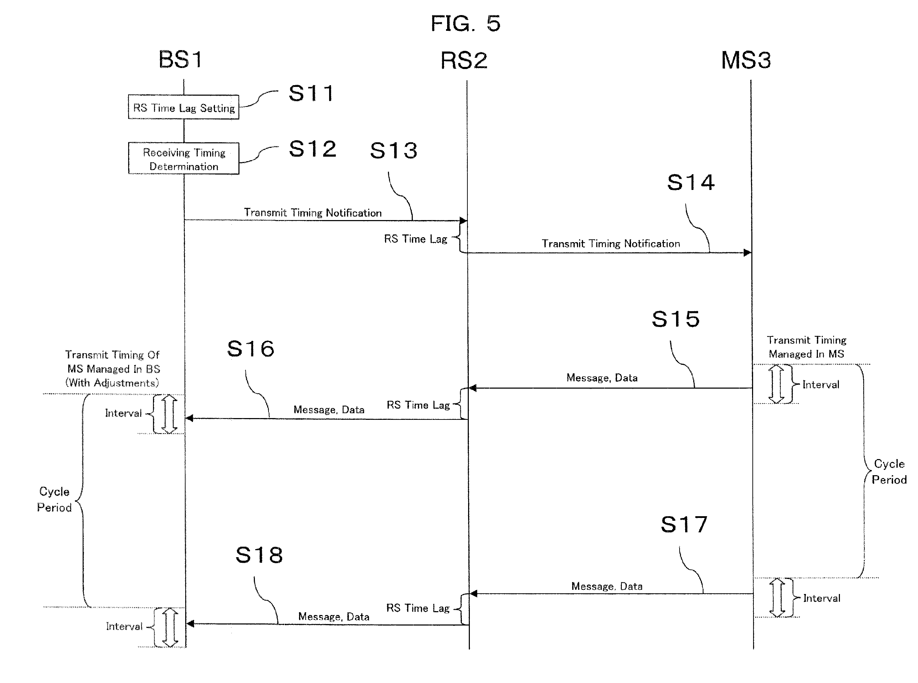

FIG. 5 shows how the transmit timing of the MS 3 is adjusted and managed in the BS1.

When transmitting messages and data from the MS 3 to the BS1 in a certain transmit timing, as described above, the determination unit 14 in the BS 1 sets time lag information of the RS 2 (step S11) and determines and manages the transmit timing (such as the interval and repeating period) of the MS 3 based on the time lag information (step S12). That is, assuming that a time lag due to relay processing in the RS 2 is added to the transmit timing (such as the interval and repeating period) managed in the MS 3, the transmit timing managed in the BS 1 is managed as a timing delayed by a time corresponding to a time lag due to relay processing in the RS 2.

Then, the BS 1 transmits information (transmit timing before adjustments; designating the transmit timing of the MS 3 in a predetermined notification message or the like (step S13). The notification message is transmitted, similarly to other messages and data addressed to the MS 3, to the MS 3 by adding a time lag corresponding to a time required for relay processing in the RS 2 (step S14).

In the MS 3, the transmit timing (such as the interval and repeating period) of the MS 3 is managed in the designated timing upon receiving the notification message. That is, the MS 3 will manage the receiving timing of the MS 3 in a timing ahead of that managed in the BS 1 by a time corresponding to the time lag.

Subsequently, the BS 1 causes the timing control unit 17 to control the receiving timing of the BS 1 based on the transmit timing of the MS 3 managed in the BS 1 after the adjustments. Accordingly, messages and data transmitted from the MS 3 to the BS 1 (steps S15 and S17) will be correctly received within an interval planned (managed) by the BS 1 even if a time lag is caused by passing through the RS 2 (steps S16 and S18).

By controlling (adjusting) the transmit (or receiving) timing of the BS 1 according to the receiving (or transmit) timing of the MS 3 determined based on the time lag information in the RS 2, as described above, the ratio of successful reception can be improved by absorbing receiving timing shifts in the BS1 or MS 3. Therefore, the utilization efficiency of radio resources can be improved by reducing redundant control messages or the like by retransmission control or the like when reception fails while ensuring communication quality.

In the examples in (A2) and (A3) described above, the receiving (or transmit) timings managed in the BS 1 and MS 3 are made to match by adjusting the receiving (or transmit) timings of the MS 3 managed in the BS 1 to ones obtained by advancing (or delaying) a time corresponding to a time lag due to relay processing in the RS 2, but in the steps S3 and S4, or S13 and S14, the receiving (or transmit) timings managed in the BS 1 and MS 3 can also be made to match by notifying the MS 3 of a timing obtained by delaying (or advancing) the receiving (or transmit) timing managed in the BS 1 by a time corresponding to the time lag from the notification unit 16, that is, by notifying the MS 3 of the receiving (or transmit) timing after the adjustment while the BS 1 performs transmission (reception) processing according to the timing before the adjustment.

### (A4) Transmission frame number synchronization of the BS 1 and RS 2

If the start point of a planned receiving (or transmit) timing or a period is absolutely determined using, for example, the frame number or the number of offset frames, instead of relatively determining using an offset value from the point of time when a message for notification of a timing is received by the MS 3, the start point calculated by the MS 3 and that in the MS 3 assumed by the BS 1 will be shifted in time, as described above, unless management of the frame number in the BS 1 and that in the RS 2 are coordinated.

Thus, in the RS 2, the frame number of a frame transmitted from the BS 1 is extracted by the extraction unit 24 and, in synchronization with frame transmission by the BS 1, the same frame number is set by the timing control unit 26 to a frame relay-transmitted by the RS 2. This makes it possible to make the start point of the receiving or transmit timing determined by the BS 1 and that by the MS 3 match.

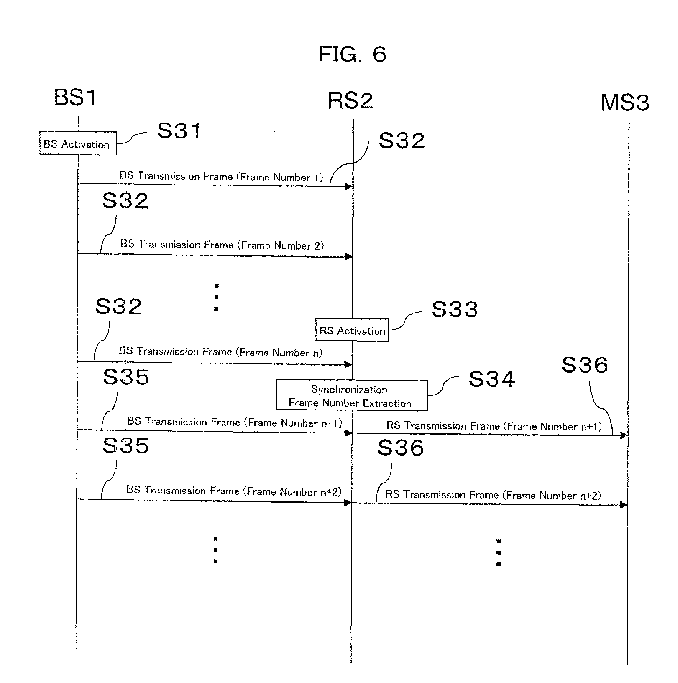

FIG. 6 shows an example in which the frame number of a frame transmitted by the BS 1 and that by the RS 2 are made to match.

The BS 1 normally transmits a radio frame (for example, an OFDMA frame) in a fixed period after activation (steps S31 and S32). A frame number is set to the DL-MAP in each radio frame so that the MS 3 can recognize each frame and incremented after each transmission operation. In the RS 2, after activation (step S33), the frame number is simply set from its initial value and, insteadof transmitting frames according to its own independent timing, the BS 1 to be connected to is detected by the extraction unit 24 and the transmit timing of frames transmitted by the BS 1 is detected for synchronization (step S34). Like synchronization of the MS 3 with the BS 1, a method of extracting preamble information of a frame transmitted by the BS 1 can be considered as a method for synchronization.

Next, in the RS 2, the frame number set to a frame received from the BS 1 (step S35) is extracted by the extraction unit 24 and a frame to which the same frame number as that of the transmission frame of the BS 1 is transmitted in a timing synchronized with the frame transmission of the BS detected by the timing control unit 26.

By synchronizing the frame number of a frame transmitted from the BS 1 and that relay-transmitted from the RS 2, as described above, correct receiving or transmit timing control can be realized even when the receiving or transmit timing is determined (managed) based on the frame number.

Meanwhile, although synchronization and frame number extraction in the RS 2 are performed only once in FIG. 6, synchronization and frame number extraction may be repeatedly performed, for example, for each frame. In FIG. 6, the RS 2 is activated after activating the BS 1, the frame synchronization and frame number extraction/setting may be performed when activation of the BS 1 is detected after activation of the RS 2 in advance.

If two or more units of RS 2 are connected in multiple stages (series), the BS 1 can be interpreted as one RS 2 and the RS 2 as another RS 2 for application described above.

### (A5) First concrete example of adjustment/management of the receiving timing of the MS 3

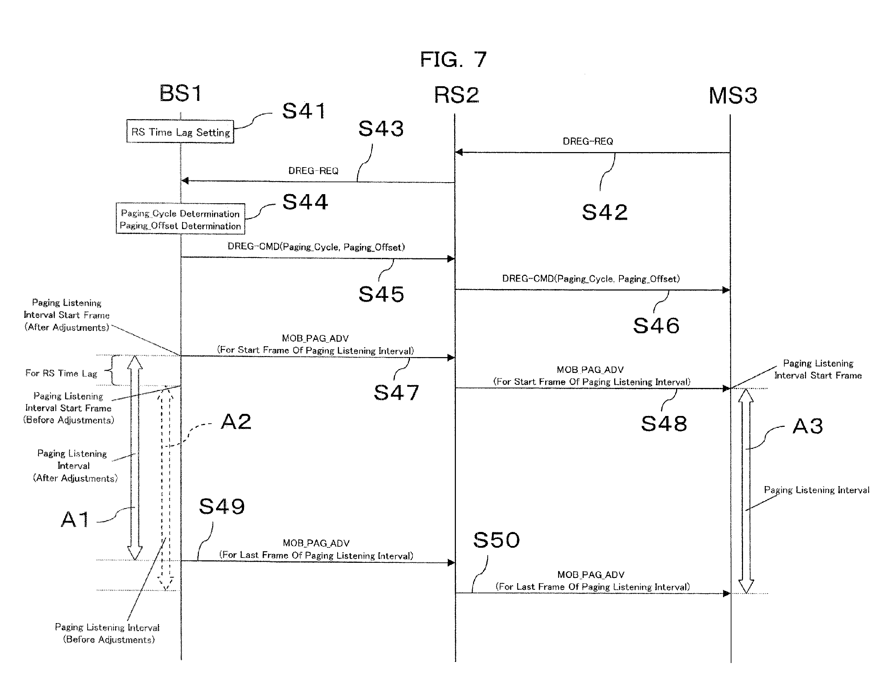

Next, as a first concrete example of receiving timing management of the MS 3 described above with reference to FIG. 4, FIG. 7 shows how receiving timing management of a paging message is performed when WIMAX is in an idle mode.

The BS 1 grasps a time lag due to relay processing in the RS 2 and sets the time lag for timing adjustments (step S41). If the MS 3 transmits a message [DREG-REQ (De-Registration Request) message] requesting a release of location registration management about the MS 3 by the BS 1 when transitioning to the idle mode (steps S42 and S43), the BS 1 determines, upon receipt of the DREG-REQ message, parameters of the receiving timing of the MS 3 such as Paging_Cycle and Paging_Offset and notifies the MS 3 of the parameters via a DREG-CMD (De-Registration Command) message (steps S45 and S461.

In the MS 3, the frame numbers of frames received from the RS 2 are divided by Paging_Cycle notified by the DREG-CMD message and a frame whose remainder of the division matches Paging_Offset is identified as a start of Paging Listening Interval as the interval within a certain fixed range of frames (See numeral A3). Though FIG. 7 shows only one period of the Paging Listening Interval, the Paging Listening Interval occurs in the Paging_Cycle period in the idle mode.

In the PS 1, the Paging Listening Interval adjusted to a timing advanced by a time lag in the RS 2 set in the step S41 (See numeral A1) is managed and a MOB_PAG_ADV (Mobile Paging Advertisement) message that makes a paging call to the MS 3 is transmitted within the Paging Listening Intervalmanagedwith adjustments (A1), not within the Paging Listening Interval managed before the adjustments (See numeral A2). Meanwhile, FIG. 7 shows how a MOB_PAG_ADV message is transmitted at the start point (start frame) and end point (last frame) of the Paging Listening Interval (A1) (steps S47, S46, S49, and S50).

Accordingly, in the MS 3, the DREG-CMD message received in the step S46 makes it possible to receive the MOB_PAG_ADV message correctly within the Paging Listening Interval (A3) managed in the MS 3.

### (A6) Second concrete example of adjustment/management of the receiving timing of the MS 3

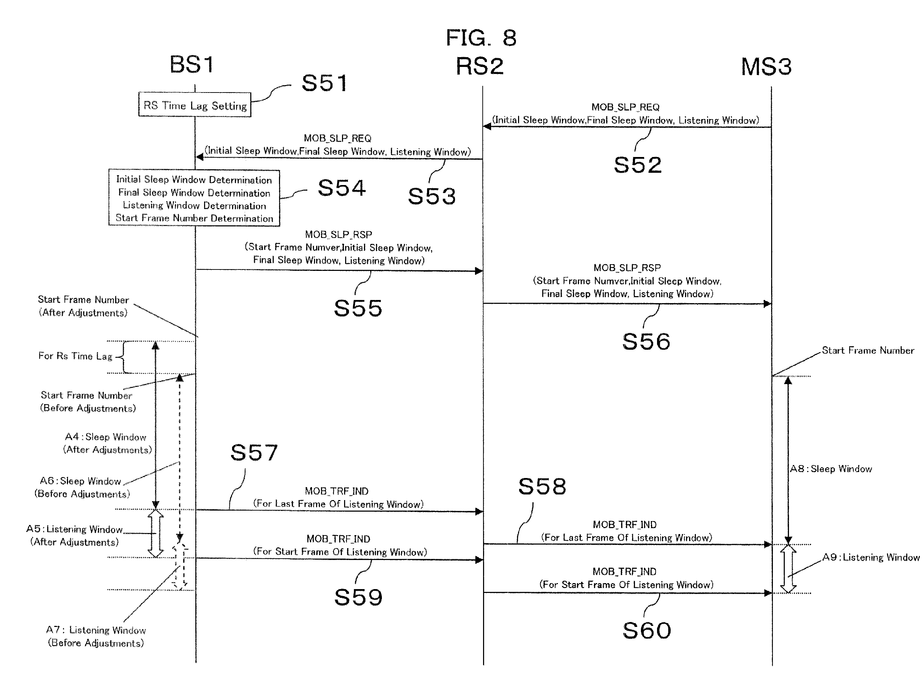

Next, as a second concrete example of receiving timing management of the MS 3 described above with reference to FIG. 4, FIG. 8 shows how timing management of Sleep Window and Listening Window is performed when WiMAX is in a sleep mode. "Sleep Mode" means a mode in which, if the MS 3 receives neither message nor data for a fixed period of time, duration in which messages and data are received (Listening Window) is intermittently caused to arise in a certain period to limit the duration of reception to save power, and when the MS 3 declares the Sleep to the BS 1, the BS 1 performs transition processing to the Sleep Mode for the MS 3.

If the BS 1 first grasps time lag information due to relay processing in the RS 2 and, after setting the time lag information for timing adjustments (step S51), receives a MOB-SLP-REQ (Mobile Sleep Request) message declaring the Sleep Mode from the MS 3 (steps S52 and S53), the BS 1 determines parameters of the receiving timing such as Initial Sleep Window, Final Sleep Window, Listening Window, and Start Frame Number (step S54) and notifies the MS 3 of the parameters via a MOB_SLP_RSP (Mobile Sleep Response) message (steps S55 and S56).

When the frame number of frame received from the RS 2 becomes the Start Frame Number, the MS 3 starts control of the Sleep Window (See numeral A8) and Listening Window (See numeral A9). Though FIG. 8 shows only one period of the Sleep Window and Listening Window, the Sleep Window and Listening Window alternatively occur in the sleep mode.

The BS1 manages the Sleep Window (See numeral A4) and Listening Window (See numeral A5) adjusted to a timing advanced by a time lag in the RS 2, and a MOB__TRF_IND (Mobile Traffic Indication) message notifying arrival of traffic to the MS 3 is transmitted within the Listening Window managed with adjustments (A5), not within the Listening Window before the adjustments (See numeral A7. Numeral A6 indicates the Sleep Window before the adjustments). FIG. 8 shows how a MOB_TRF_IND message is transmitted at the start point (last frame) and end point (start frame) of the Listening Window (A5) (steps S57, S58, S59, and S60).

Accordingly, in the MS 3, the MOB_SLF_RSP message received in the step S56 makes it possible to receive the MOB_TRF_IND message correctly within the Listening Window (A9) managed in the MS 3.

### (A7) Concrete example of adjustment/management of the transmit timing of the MS 3

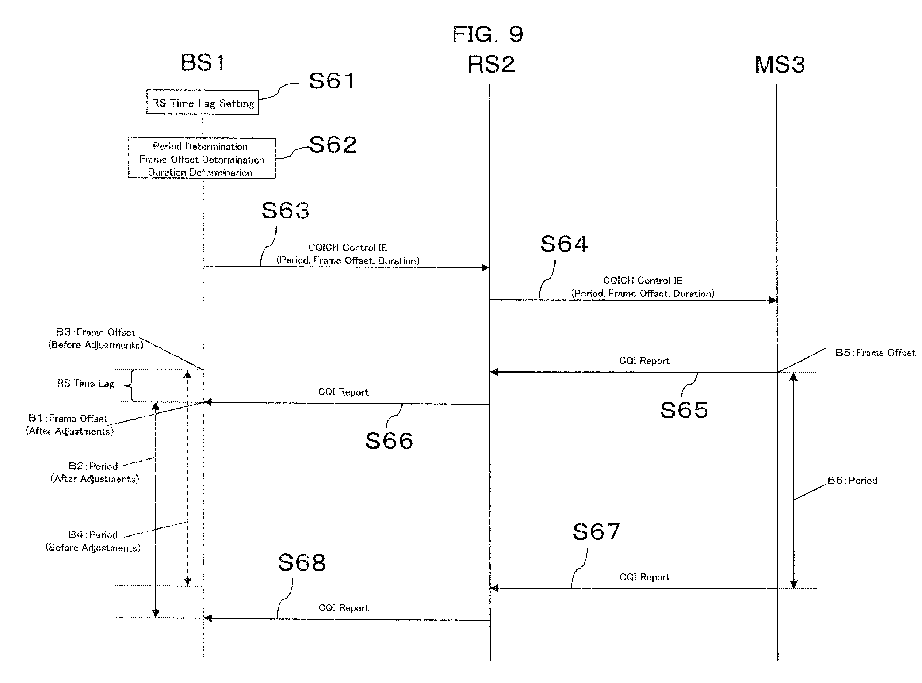

Next, as a concrete example of transmit timing management of the MS 3 described above with reference to FIG. 5, FIG. 9 shows how transmit timing management of CQICH is performed in WiMAX. The CQICH is a control channel for periodically notifying the BS 1 of CINR (Carrier to Interference + Noise Ratio), which is radio channel quality information of a downstream link measured in the MS 3 via a CQI (Channel Quality Indicator) Report message and the BS 1 performs transmission of the downstream link by adaptively changing a modulation method and encoding rate in accordance with the CINR notified by the message.

The BS 1 grasps a time lag due to relay processing in the RS 2 and sets the time lag for timing adjustments (step S61). The BS 1 also determines parameters of the transmit timing of a CQI Report message to instruct the MS 3 such as Period, Frame Offset, and Duration (step S62) and notifies the MS 3 of the parameters via a CQICH (Channel Quality Indicator Channel) Control IE (Information Element) message (steps S63 and S64).

The MS 3 transmits the CQI Report message for a duration indicated by "Duration" in a period (See numeral B6) indicated by "Period" from a frame (See numeral B5) whose low-order-bit frame number of frame received from the RS 2 becomes equal to the notified "Frame Offset" (steps S65, S66, S67, and S68). Though FIG. 9 shows only one period of the CQI Report message, the CQI Report message occurs in a period of "Period" while the CQICH is established.

The BS 1 manages the timings (Frame Offset, Period, and Duration) adjusted to a timing delayed by a time lag in the RS 2 (See numerals B1 and B2) and receives the CQI Report message from the MS 3 in a timing (planned time) managed by adjustments, not in a timing before the adjustments (See numerals B3 and B4).

### (A8) A message or data arrives at the MS 3 from the BS 1

In a radio communication system like WiMAX in which adaptive modulation is used, a broadcast of messages and data like when per forming transmission to all MS 3 generally uses a modulation method that is more error-resistant though its modulation rate is low, that is, a modulation method that allows reception at a weaker receiving level.

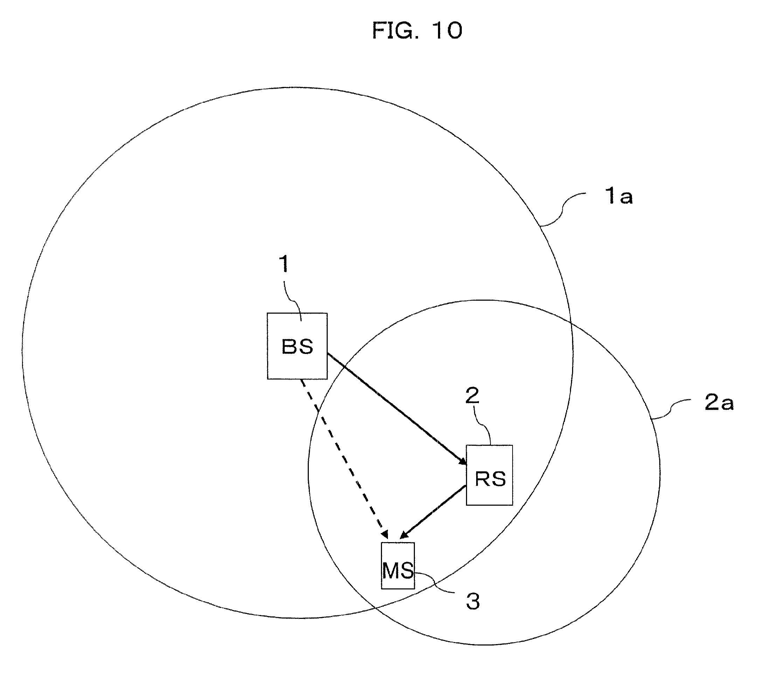

In such a case, as shown schematically in FIG. 10, broadcast messages from the BS 1 may be receivable directly by the MS 3 without passing through the RS 2 depending on a location of the MS 3 (See a dotted line arrow). In FIG. 10, numeral 1a denotes a radio area (cell) formed by the BS 1 and numeral 2a denotes a radio area formed by the RS 2. Normal messages and data that are transmitted individually to each MS 3, on the other hand, are more advantageously transmitted via the RS 2 because a high-speed modulation method is used for transmission (See a solid line arrow).

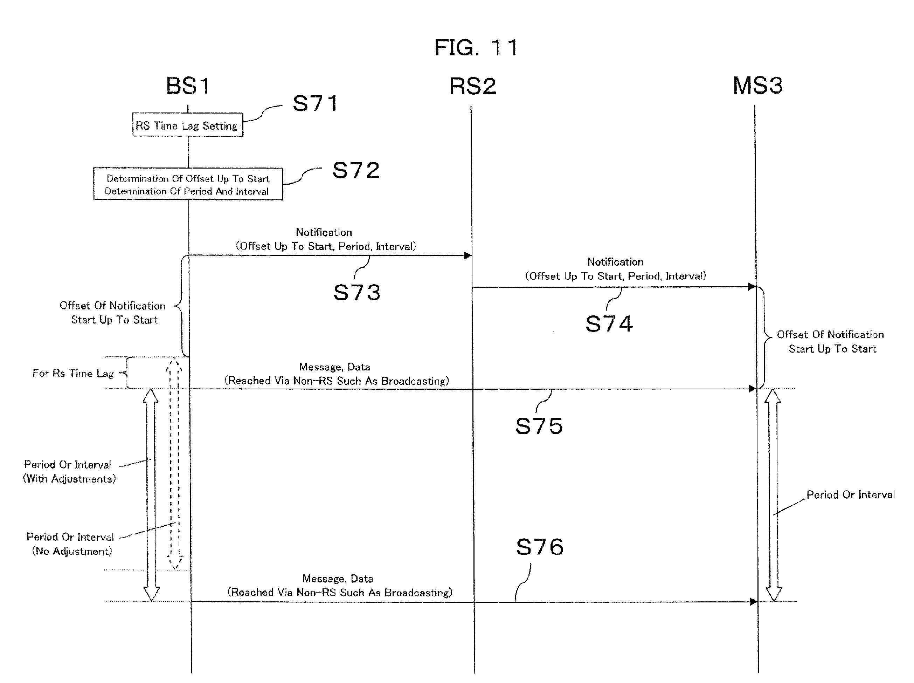

If, in a situation in which individual messages and data to the MS 3 are transmitted and received via the RS 2 and broadcast messages addressed to all MS 3 arrive at the MS 3 directly without passing through the RS 2, instructions of the receiving timing of messages and data from the BS 1 to the MS 3 are given, as shown in FIG. 11, and the start point of the receiving timing of messages and data in the MS 3 is designated as a relative offset from the point of time (step S74) when the MS 3 receives a message providing notification of the receiving timing (steps S73 and S74), the start point of the receiving timing of the MS 3 will be delayed by a time lag in the RS 2. This is because messages providing notification of the receiving timing are not broadcast messages, but messages individually transmitted to the MS 3 via the RS 2.

If the BS 1 transmits, under such conditions, a broadcast message that can be received by all MS 3 like the MOB_PAG_ADV message in the example described with reference to FIG. 7 or broadcast data of a broadcast type service like MBS (Multicast Broadcast Service), the message or data will arrive at the MS 3 directly without passing through the RS 2 with no time lag. Accordingly, a message or data transmitted from the BS 1 by assuming the receiving timing for the MS 3 will arrive at the MS 3 before the receiving timing managed in the MS 3, leading to reception failure.

Thus, to further add a time lag in the RS 2 to the offset with respect to the receiving timing start point, the BS 1 manages the receiving timing (a period and/or interval) of the MS 3 in a timing delayed by the time lag in the RS 2 after the determination unit 14 sets time lag information (downstream link) (stepS71) and determines an offset, a period, and an interval up to the start point based on the time lag information (step S72). This makes the receiving timing managed in the MS 3 and that managed in the BS 1 match.

Therefore, if the BS 1 transmits broadcast messages and data by controlling transmission processing in the transmission unit 12 (signal processing unit 121) through the timing control unit 17 in the period and/or interval after adjustments (steps S75 and S76), the MS 3 can correctly receive such broadcast messages and data in the receiving timing managed in the MS 3.

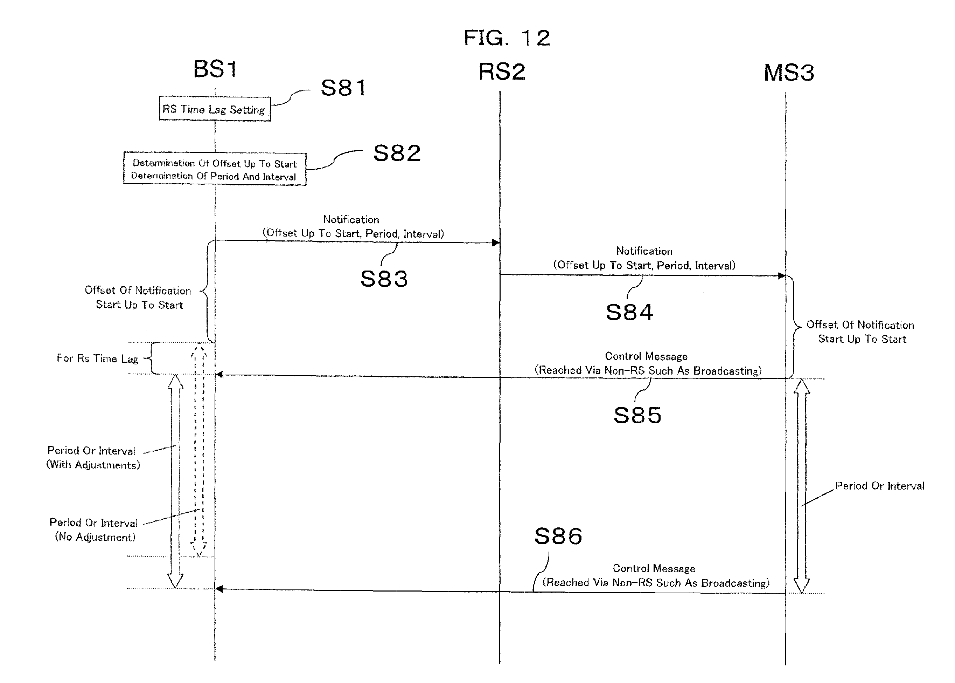

Also for an upstream link, by adjusting the transmit timing of the MS 3 managed in the BS 1 to make the transmit timing and that managed in the MS 3 match, as shown in FIG. 12, failure of reception of messages and data arriving directly from the BS 1 to the MS 3 without passing through the RS 2 can be avoided.

That is, if instructions of the transmit timing of messages and data are given from the BS 1 to the MS 3 (steps S83 and S84), by designating the start point of transmit timing as a relative offset from the time (step S84) when the MS 3 receives a message for which notification of the transmit timing is provided, in order to further add a time lag in the RS 2 to the offset to the transmit timing start point, the BS 1 manages the transmit timing (a period and/or interval) of the MS 3 in a timing delayed by the time lag in the RS 2 after the determination unit 14 sets time lag information (upstream link) (step S81) and determines an offset, a period, and an interval up to the start point based on the time lag information (step S82).

This makes the transmit timing managed in the MS 3 and that of the MS 3 managed in BS1 match. Therefore, if the MS 3 transmits messages and data addressed to the BS1 according to the period and/or interval managed by receiving the message (steps S83 and S84) providing notification of the transmit timing from the BS1 (steps S85 and S86), while the BS 1 controls signal processing by the reception unit 11 (signal processing unit 112) through the timing control unit 17 in the timing managed in the BS 1 itself, messages and data from the MS 3 can correctly be received without passing through the RS 2.

### (A9) If the RS 2 is connected in multiple stages

Next, FIG. 13 shows a case in which a plurality of units of RS 2 are connected in multiple stages (series). Though FIG. 13 shows an example in which three units of the RS 2 (2-1, 2-2, and 2-3) are arranged between BS 1 and MS 3, any number of units of RS 2 may be arranged. The configuration of each RS 2 unit is the same as that described in FIG. 3 or an equivalent one.

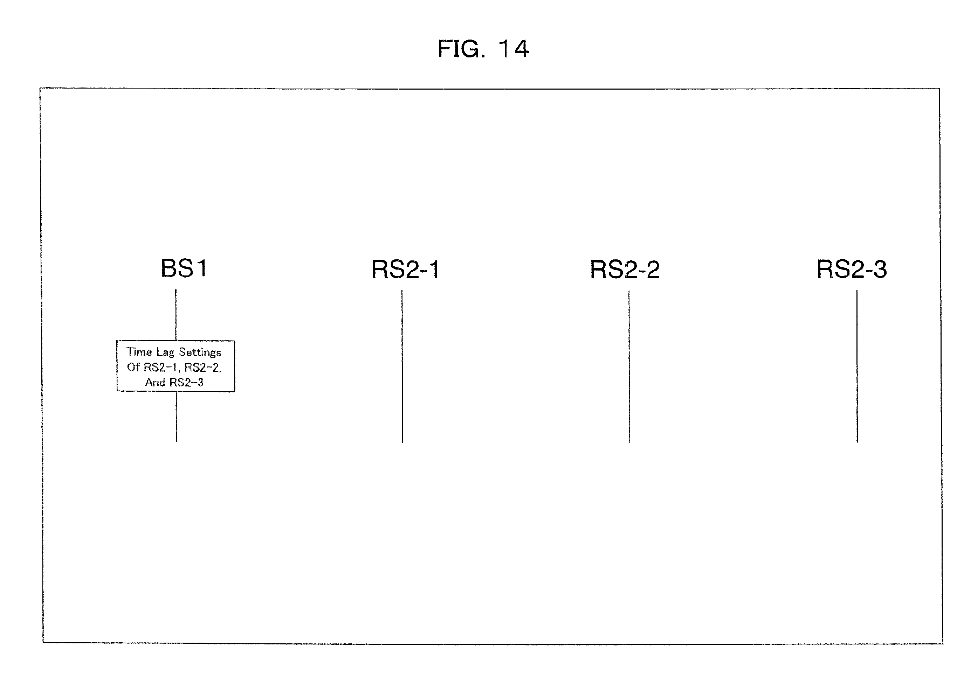

In a multi-stage connected system like one shown above, by setting time lag information of all units RS 2-1, 2-2, and 2-3 to the BS 1, as shown in FIG. 14 (set, for example, by the determination unit 14), it becomes possible to adjust and manage the receiving or transmit timing of the MS 3 described in (A1) to (A7).

Or, it is also possible to adjust and manage the receiving or transmit timing of the MS 3 described in (A1) to (A7) when the BS 1 and each RS 2 set a sum total of time lag information of all connected RS 2 to the side of the MS 3 from the local station (hereinafter referred to as a downstream side) to, for example, the determination unit 14.

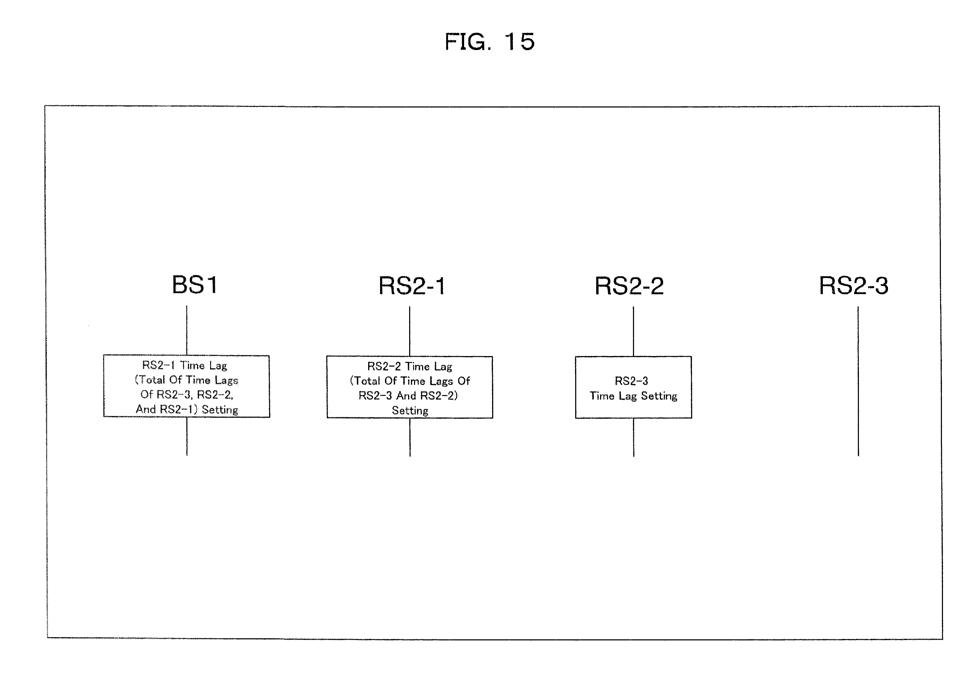

That is, as shown in FIG. 15, the RS 2-2 sets time lag information of the RS 2-3 because the RS 2-3 is connected on the downlink side of the RS 2-2. Similarly, the RS 2-1 sets a sum total of the time lag information of the RS 2-3 and that of the RS 2-2 because the RS 2-3 and RS 2-2 are connected on the downlink side of the RS 2-1, and the BS 1 sets a sum total of the time lag information of the RS 2-3, that of the RS 2-2, and that of the RS 2-1 because the RS 2-3, RS 2-2 and RS 2-1 are connected on the downlink side of the BS 1. However, the RS 2-3 sets no sum total of time lag information because the RS 2-3 is nearest to the MS 3 and no RS is connected to the side of the MS 3.

### (A9.1) Setting method of time lag information (Part 1)

A setting of the sum total of time lag information like one shown in FIG. 15 can be realized, as shown in FIG. 16, by notification of the sum total of time lag information set to each RS 2 to other RS 2 or the BS 1.

That is, in the example shown in FIG. 16, the most downlink RS 2-3, which is located nearest to the MS 3, notifies the RS 2-2 to an upstream side of time lag information of the RS 2-3 through the notification unit 28 using a control message or the like (step S91), and the RS 2-2 extracts the notified time lag information through the extraction unit 24 before setting the notified time lag information to itself (that is, retained in the retention unit 27; similarly hereafter) (step S92) and, at the same time, notifies the RS 2-1 on the uplink side of information obtained after adding time lag information of the RS 2-2 to the time lag information through the notification unit 28 (step S93).

Similarly, the RS 2-1 sets the time lag information notified from the RS 2-2 (sum total of time lag information of the RS 2-3 and RS 2-2) on the downlink side to itself (step S94) and, at the same time, notifies the BS 1 on the upstream side of information obtained after further adding time lag information of the RS 2-1 to the time lag information through the notification unit 28 using a control message or the like (step S95), and the BS 1 sets the notified time lag information (sum total of time lag information of the RS 2-3, RS 2-2 and RS 2-1) to itself (step S96).

### (A9.2) Setting method of time lag information (Part 2)

The setting of time lag information shown in FIG. 15 can also be realized when the BS 1 or each RS 2 makes an inquiry about a sum total of time lag information to the RS 2 connected on the downstream side using a control message or the like and the inquired RS 2 notifies the inquiring RS 2 or BS of the sum total of time lag information using a control message or the like.

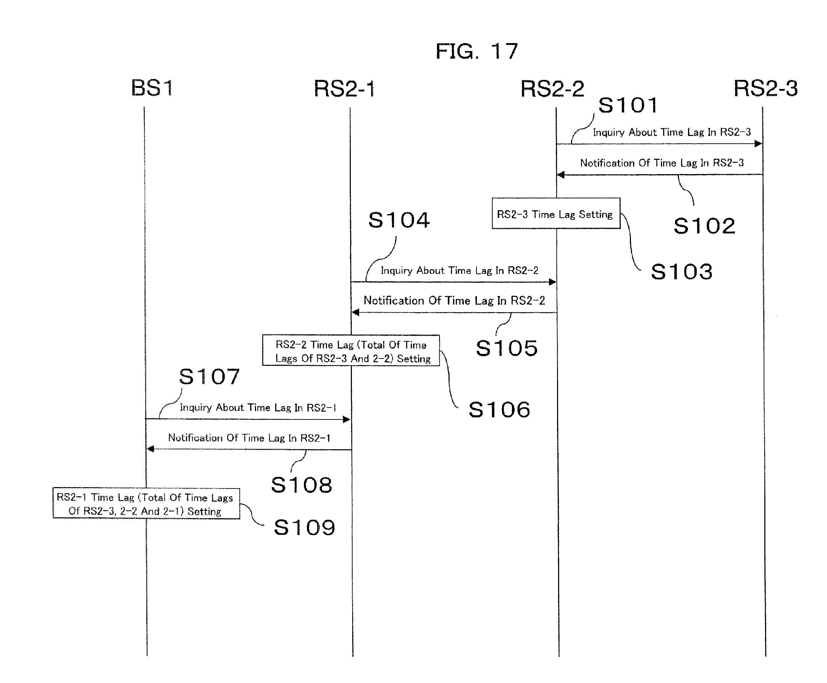

First, as shown in FIG. 17, the RS 2-2 makes an inquiry about time lag information to the RS 2-3 on the downlink side through the request unit 25 (step S101) and the inquired RS 2-3 notifies the inquiring RS 2-2 of the time lag information of the RS 2-3 through the notification unit 28 (step S102). The notified RS 2-2 extracts the notified time lag information through the extraction unit 24 before setting the time lag information to itself (step S103).

Similarly, the RS 2-1 makes an inquiry about time lag information to the RS 2-2 on the downlink side through the request unit 25 (step S104) and the inquired RS 2-2 notifies the inquiring RS 2-1 of the time lag information of the RS 2-2 through the notification unit 28 (step S105). The RS 2-1 adds the notified time lag information to the time lag information of the RS 2-1 before setting the added time lag information to itself (step S106).

Subsequently, the BS 1 makes an inquiry about time lag information to the RS 2-1 on the downlink side through the request unit 15 (step S107) and the inquired RS 2-1 notifies the inquiring BS 1 of time lag information set to the RS 2-1, that is, the time lag information obtained by adding time lag information of the RS 2-1 to the sum total of time lag information in the RS 2-3 and RS 2-2 through the notification unit 28 (step S108). The BS 1 extracts the notified time lag information, that is, the sum total of time lag information in the RS 2-3, RS 2-2, and RS 2-1 through the determination unit 14 before setting the time lag information to itself (step S109).

### (A9.3) Setting method of time lag information (Part 3)

The setting of time lag information shown in FIG. 15 can also be realized by sequentially making an inquiry about time lag information starting at the BS 1 as a starting point on the downlink side RS 2 from an uplink side using a control message or the like and then returning a response from the downlink side on the uplink side using a control message or the like.

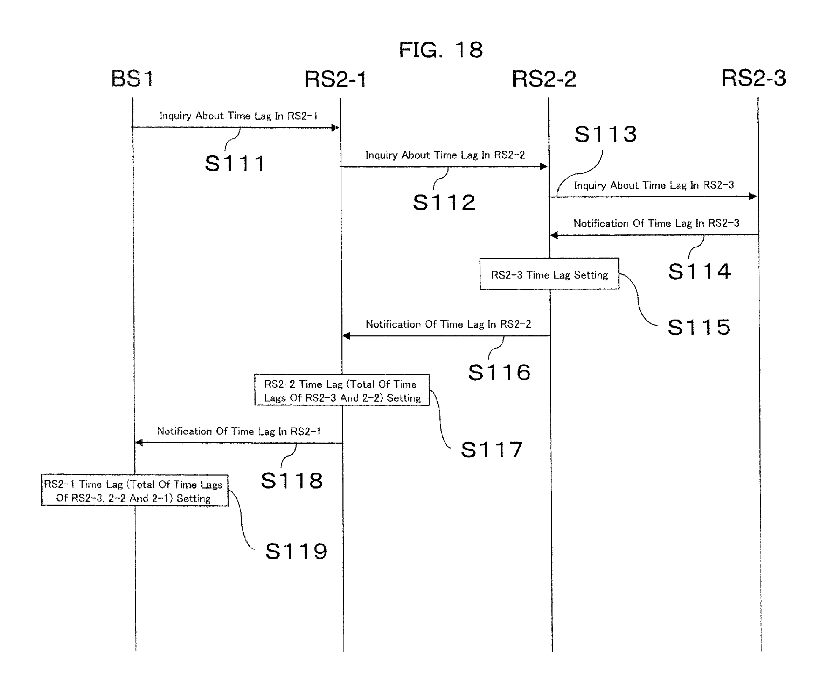

That is, as shown in FIG. 18, the BS 1 first makes an inquiry about time lag information to the RS 2-1 on the downlink side through the notification unit 16 (step S111), the RS 2-1 that has received the inquiry makes an inquiry about time lag information to the RS 2-2 on the downlink side through the request unit 25 thereof (step S112), and the RS 2-2 that has received the inquiry further makes an inquiry about time lag information to the RS 2-3 on the downlink side through the request unit 28 thereof (step S113).

Then, upon receipt of the inquiry, the most downlink RS 2-3 notifies the inquiring RS 2-2 of time lag information of the RS 2-3 through the notification unit 28 (step S114), and the RS 2-2 extracts the notified time lag information in the RS 2-3 through the extraction unit 24 before setting the time lag information to itself (step S115) and, at the same time, notifies the RS 2-1 of time lag information obtained by adding time lag information of the RS 2-2 to the time lag information through the notification unit 28 as a response to an inquiry from the RS 2-1 on the uplink side (step S116).

The RS 2-1 extracts the time lag information notified from the RS 2-2, that is, the sum total of time lag information in the RS 2-3 and RS 2-2 through the extraction unit 24 before setting the time lag information to itself (step S117) and notifies the inquiring BS 1 of time lag information obtained by adding time lag information of the RS 2-1 to the time lag information through the notification unit 28 (step S118). Accordingly, the BS 1 extracts the time lag information notified from the RS 2-1, that is, the sum total of time lag information in the RS 2-3, RS 2-2 and RS 2-1 through the determination unit 14 before setting the time lag information to itself (step S119).

Since it becomes possible to set (retain) a cumulative value of the time lag information of part or all of RS 2 intensively or dispersively in the BS 1 and/or RS 2 even in a system configuration in which a plurality of units of RS 2 are connected in multiple stages (series), as described above, the suitable timing control can be realized regardless of the number of RS 2 through which signals are transmitted.

### (A10) Timing adjustments by the RS 2

Transmit (or receiving) timing adjustments of messages and data in the BS 1 described above can also be made in the RS 2. For transmit timing adjustments, for example, the BS 1 determines parameters of the transmit timing such as wait time till retransmission to the MS 3 after the RS 2 receives a message or data for which transit timing adjustments should be made based on time lag information (step S122), as shown in FIG. 19, and notifies the individual RS 2 of the parameters through the notification unit 16 using a control message or the like (step S123).

After the parameters notified from the BS 1 are extracted by the extraction unit 24 and retained in the retention unit 27, the RS 2 sets the transmit timing for itself based on the parameters through the timing control unit 26 (step S124), and when a message or data for which timing adjustments (for example, identification by the frame number) should be made is received (step S125), the message or data is transmitted to the MS 3 (or another RS 2) when the set transmit timing has arrived (step S126).

In this example, the BS 1 spontaneously notifies the RS 2 of the parameters, but as shown by a dotted line arrow for step 123' in FIG. 19, when the RS 2 makes an inquiry about the parameters through the request unit 25, the BS 1 may notify the inquiring RS 2 of the parameters as a response through the notification unit 15 (step S123').

### (A10.1) Application example of timing adjustments by the RS 2

Such transmit timing adjustments in the RS 2 can be considered to be performed for control described below.

For a system configuration, for example, in which a plurality of units of RS 2 (FIG. 20 shows two units, the RS 2-1 and RS 2-2, but three or more units are also allowed) under the BS 1 are connected in parallel (further, a plurality of units of RS 2 may be connected in series between BS 1 and MS 3), as shown in FIG. 20, that is, a system configuration that provides a service like a broadcast type service in which messages and data of the same content are received regardless of under which RS 2 (or BS 1) the MS 3 is located, switching of the RS 2 (or BS 1) to which the MS 3 is connected can be considered as the MS 3 moves.

To provide a service before and after such switching to the MS 3 without interruption, it is necessary for all RS 2 and BS 1 to transmit messages and data of the same content in the same timing. To realize such transmission, the transmit of each RS 2 must be matched by considering a time lag in each RS 2.

For example, the BS 1 may transmit messages and data of the same content to individual RS 2 by adjusting the transmit timing for each RS 2 in advance, but a transmission frequency of messages and data of the same content from the MS 1 will go up and processing load will increase.

Thus, the RS 2 with a shorter time lag is caused to wait to synchronize with the transmit timing of the RS 2 having the longest time lag. In this manner, the BS 1 needs to transmit messages and data of the same content only once to each RS 2.

In this case, the BS 1 receives notification of time lag information from each connected RS 2 in step S121 denoted by a dotted line arrow in FIG. 19, judges a maximum time for wait time till retransmission to the MS 3 after the RS 2 receives a message or data for which transmit timing adjustments should be made based on the time lag information and determines parameters of the transmit timing of each RS 2 so that each RS 2 performs relay transmission in synchronization with the maximum time in step S122, and notifies each RS 2 of the parameters in step S123.

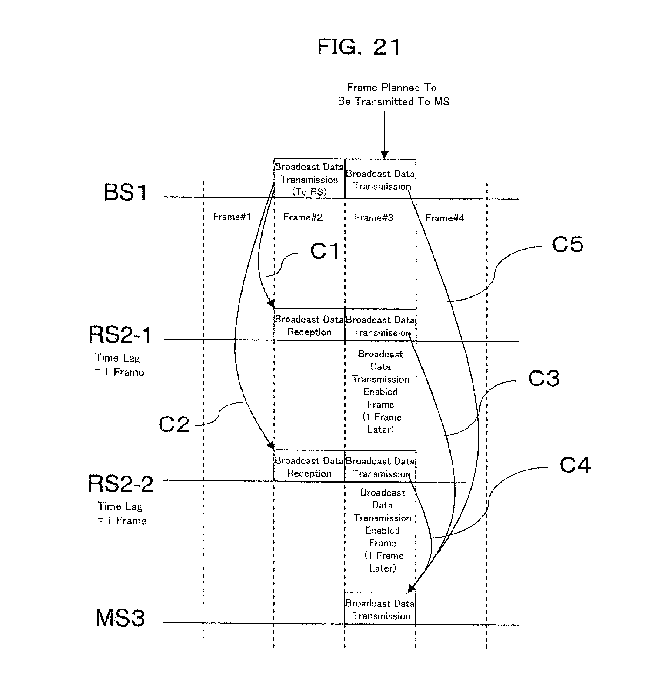

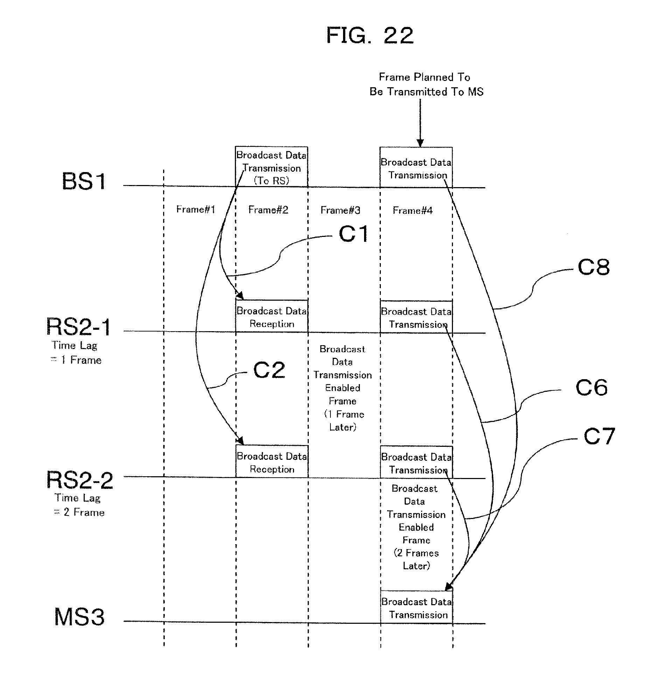

FIGS. 21 and 22 show an example in which the above synchronization method between RS 2 is applied.

FIG. 21 shows a case in which the time lag of the RS 2-1 and that of the RS 2-2 are both one frame. In this case, the BS 1 first transmits a message or data to the RS 2-1 and RS 2-2 in a timing of frame #2 in FIG. 21 (See the arrows C1 and C2). This transmission may be unicast transmission individually from the BS 1 to the RS 2-1 and RS 2-2, or multicast transmission as a multicast group including the RS 2-1 and RS 2-2.

The RS2-1 and RS 2-2 each receive the message or data transmitted by the BS 1 in the timing of frame #2, but due to a time lag of one frame in each, the message or data received in a timing of frame #3 will be relay-transmitted (See the arrows C3 and C4). At this point, for the MS 3 directly connected to the BS 1, the BS 1 may similarly retransmit the message or data in the timing of frame #3 (See the arrow C5).

This enables the MS 3 to receive a message or data of the same content in the same frame #3 from any of the RS 2-1, RS 2-2 and BS 1.

FIG. 22 shows, on the other hand, a case in which the time lag of the RS 2-1 is one frame, but that of the RS 2-2 is two frames. As in the case in FIG. 21, the BS 1 first transmits a message or data to the RS 2-1 and RS 2-2 in a timing of frame #2 in FIG. 22 (See the arrows C1 and C2). Also, this transmission may be unicast transmission individually from the BS 1 to the RS 2-1 and RS 2-2, or multicast transmission as a multicast group including the RS 2-1 and RS 2-2.

The RS2-1 and RS 2-2 each receive the message or data transmitted by the BS 1 in the timing of frame #2, but the next possible transmission timing in the RS 2-1 is a timing of frame #3 due to a time lag of one frame and that in the RS 2-2 is a timing of frame #4 due to a time lag of two frames, creating different possible transmission timings for the RS 2-1 and RS 2-2.

Thus, the message or data received by the RS 2-1 and RS 2-2 in the timing of frame #2 can be transmitted in the timing of frame #3, which is the next frame, in the RS 2-1, but since the time lag in the RS 2-2 is two frames, the timing control unit 26 makes transmission to further wait till the timing of frame #4, which is the next frame, for relay-transmission of the message or data received from the BS 1 together with the RS 2-2 in the timing of frame #4 (See the arrows C6 and C7). At this point, for the MS 3 directly connected to the BS 1, the BS 1 may similarly retransmit the message or data in the timing of frame #4 (See the arrow C8).

This enables the MS 3 to receive a message or data of the same content in the same frame #4 from any of the RS 2-1, RS 2-2 and BS 1.

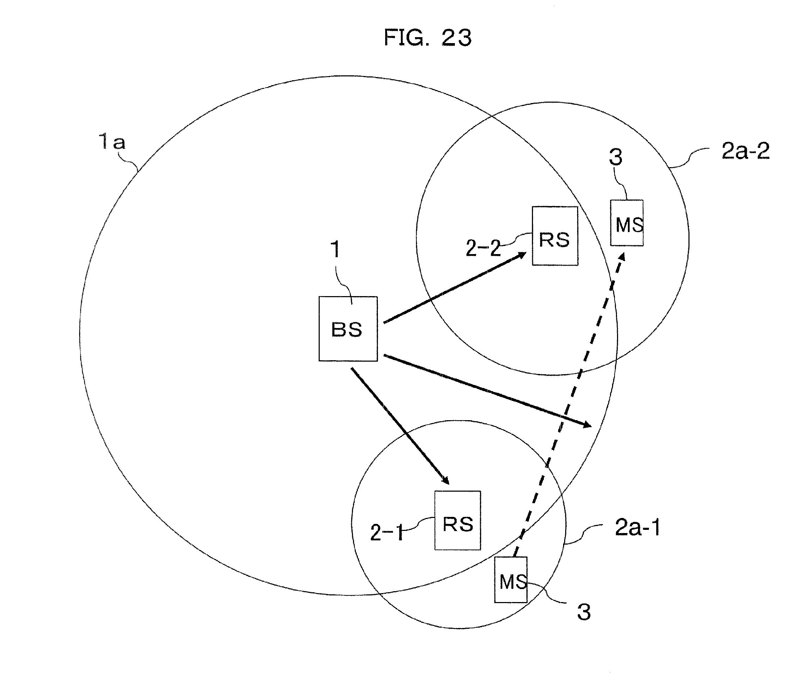

Therefore, as shown by a dotted line arrow in FIG. 23, the MS 3 can receive a service without interruption even when the MS 3 moves crossing each radio area in an order of a radio area 2a-l of RS 2-1 → a radio area 1a of BS 1 → a radio area 2a-2 of RS 2-2.

### (A11) Application example of timing adjustments in consideration of movements of the MS between the BS and RS

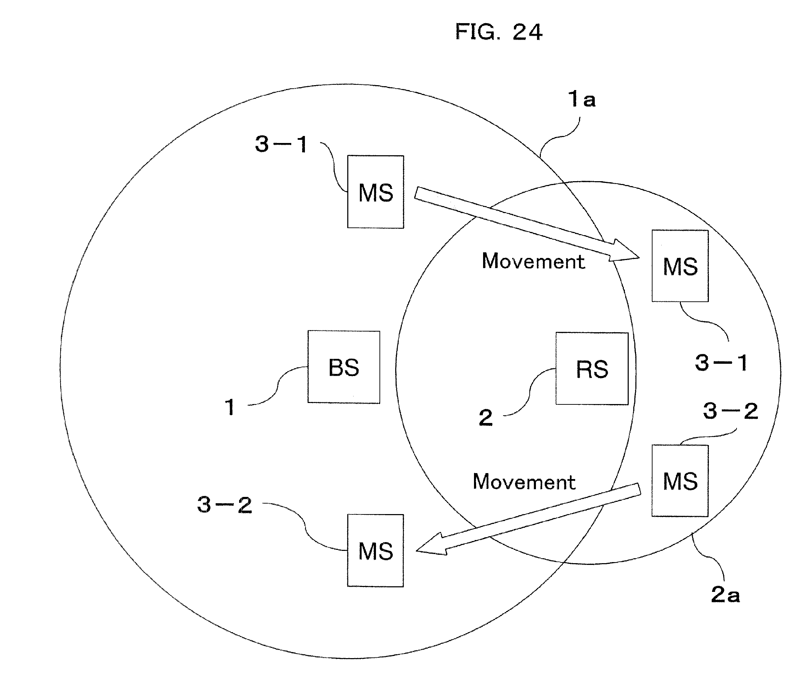

When WiMAX is in an idle mode as shown in FIG. 7, the BS does not know whether the MS is located within a radio area of the BS or that of the RS. Thus, as shown in FIG. 24 schematically, a case can be considered in which the MS 3(3-1) located within a radio area 1a of the BS 1 to communicate with the BS 1 without passing through the RS 2 moves to a radio area 2a of the RS 2 after transitioning to the idle mode. Conversely, a case can also be considered in which the MS 3(3-2) located within the radio area 2a of the RS 2 to perform communication via the RS 2 moves to the radio area 1a of the BS 1 after transitioning to the idle mode.

If, in such cases, control (adjustments) and management of the transmit timing of the BS 1 or receiving timing of the MS 3 are performed concerning Paging Listening Interval (PLI) in accordance with the time lag in the RS 2 described above, and the MS 3 moves between the radio area 1a of the BS 1 and the radio area 2a of the RS2 after transitioning to the idle mode, the aforementioned paging call message (MOB_PAG_ADV message) may not be received within the Paging Listening Interval (PLI) (no paging call can be made) before or after the movements.

Thus, steps for preventing such a situation from occurring will be described below. The time lag setting and Paging Listening Interval management (determination and storage) are as already described.

### (A11.1) If the transmit timing (PLI) in the BS 1 has already been adjusted

### (a) If Paging Listening Interval is longer than a time lag in the RS 2

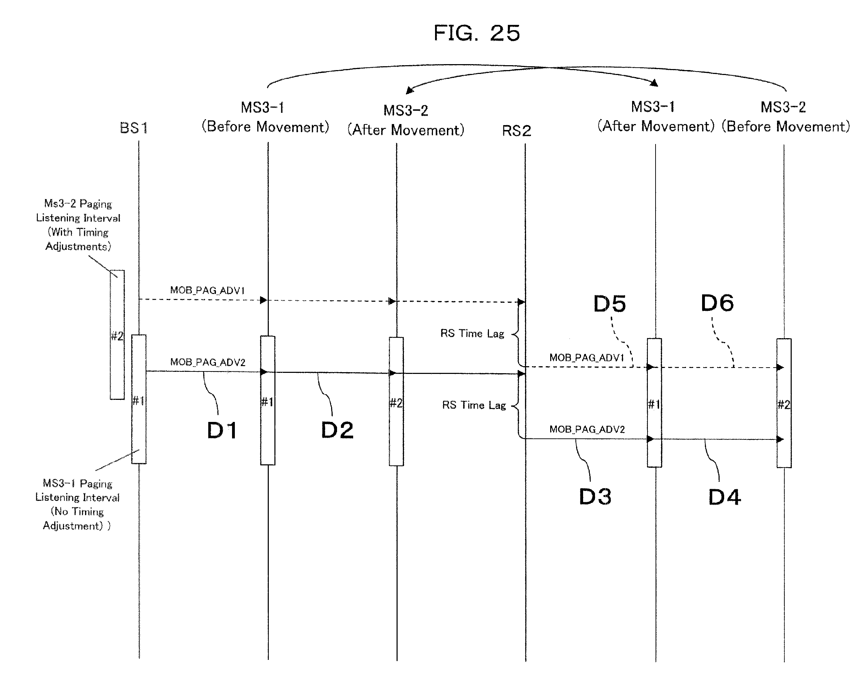

FIG. 25 shows how paging call control is performed when the MS 3-1 and MS 3-2 move as shown in FIG. 24.

Since the MS 3-1 is directly connected to the BS 1 when transitioning to the idle mode, the BS 1 manages normal Paging Listening Interval #1 for which no aforementioned timing adjustment has been made. Thus, the Paging Listening Interval of the MS 3-1 in the BS 1 will be managed as the Paging Listening Interval #1 even after the MS 3-1 has moved to the radio area 2a of the RS 2 during the idle mode.

The MS 3-2, on the other hand, is connected to the BS 1 via the RS 2 when transitioning to the idle mode and thus the BS 1 manages Paging Listening Interval #2 for which the aforementioned timing adjustment for the MS 3-2 has been made (that is, advanced by a time corresponding to a time lag due to relay processing in the RS 2). Therefore, the Paging Listening Interval of the MS 3-2 in the BS 1 will be managed as the Paging Listening Interval #2 even after the MS 3-2 has moved to the radio area 1a of the BS 1 during the idle mode.

Each of the Paging Listening Intervals #1 and #2 is managed by being determined by the determination unit 14 and retained by the retention unit 18 described with reference to FIG. 2 (similarly hereafter). In an example shown in FIG. 25, the Paging Listening Intervals #1 and #2 (for example, two frames) are longer than the time lag (for example, one frame) in the RS 2.

Here, transmission of a paging call message (MOB_PAG_ADV1 message or MOB_PAG_ADV2 message) can be considered to make a paging call to the MS 3-1 or MS 3-2, but considering a relationship of the length of the Paging Listening Intervals #1 (#2) and that of the time lag in the RS 2, there is no need to transmit the MOB_PAG_ADV1 message in this case (See dotted line arrows) and the BS 1 only needs to transmit the MOB_PAG_ADV2 message as a common message.

That is, if at least the MOB_PAG_ADV2 message is transmitted while the Paging Listening Interval #1 and Paging Listening Interval #2 (two frames) managed in the BS 1 overlap (See a solid line arrow D1) even when the MS 3-1 has moved from the radio area 1a of the BS 1 to the radio area 2a of the RS 2 during the idle mode, the MOB_PAG_ADV2 message can be received by the MS 3-1 after moving to the radio area 2a during Paging Listening Interval #1 managed in the MS 3-1 (See a solid line arrow D3) even if there is a time lag (one frame) in the RS 2. The MOB_PAG_ADV2 message can also be received correctly by the MS 3-2 that has not moved out of the radio area 2a of the RS 2 during Paging Listening Interval #2 (See a solid line arrow D4).

If, on the other hand, the MS 3-2 whose Paging Listening Interval #2 is managed in the BS 1 has moved from the radio area 2a of the RS 2 to the radio area a of the BS 1 during the idle mode, the MCP_PAG_ADV2 message can still be received by the MS 3-2 during Paging Listening Interval #2 (See a solid line arrow D2). The MOB_PAG_ADV2 message can also be received correctly by the MS 3-1 that has not moved out of the radio area 1a of the BS 1 during Paging Listening Interval #1 (See the solid line arrow D1).

That is, if the MOB_PAG_ADV2 message is transmitted at least once during an overlapping period regardless of movements of the MS 3-1 or MS 3-2 between the radio areas 1a and 2a of the BS1 and RS 2 respectively, the MS 3-1 and MS 3-2 can receive the MOB_PAG_ADV2 message during Paging Listening Interval #1 and Paging Listening Interval #2 managed by each.

The MOB_PAG_ADV1 message may also be transmitted together from the BS 1 during Paging Listening Interval #2 and, in such a case, if the MS 3-1 has moved from the BS 1 area to the radio area 2a of the RS 2, the MOB_PAG_ADV1 message will be received by the MS 3-1 after moving to the radio area 2a during Paging Listening Interval #1 (See a dotted line arrow D5) and, if the MS 3-2 has not moved out of the radio area 2a of the RS 2, the MOB_PAG_ADV1 message will be received by the MS 3-2 during Paging Listening Interval #2 (See a dotted line arrow D6).

### (b) If Paging Listening Interval is as long as the time lag in the RS 2

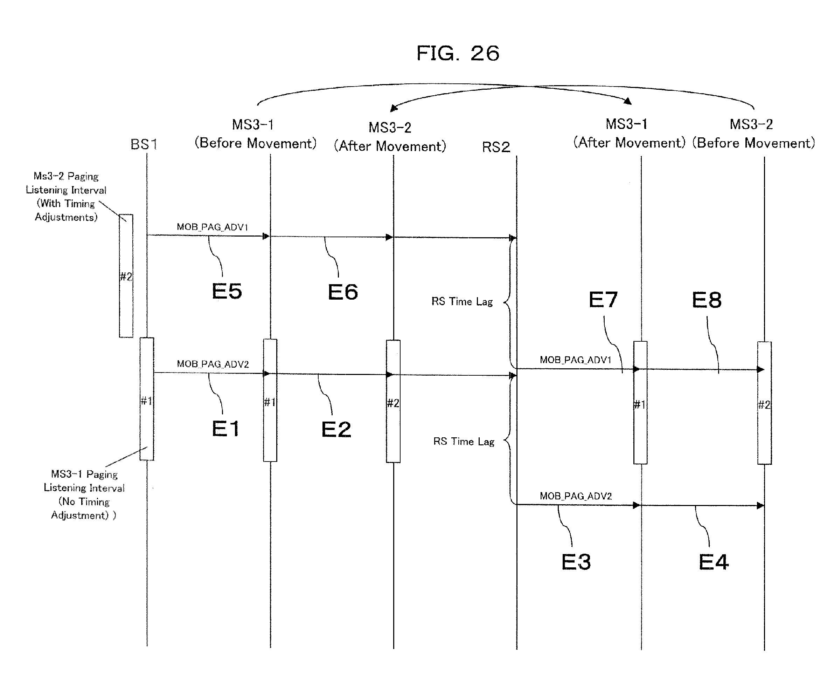

Next, FIG. 26 shows, like FIG. 25, how paging call control is performed when the MS 3-1 and MS 3-2 move, but there is a difference in the lengths of the time lag and Paging Listening Interval from the example of FIG. 25. That is, in the example of FIG. 26, the time lag (for example, two frames) in the RS 2 is as long as the Paging Listening Intervals #1 and #2 (for example, two frames).

In this case, both the MOB_PAG_ADV1 message and MOB_PAG_ADV2 message must be transmitted to make a paging call to the MS 3-1 or MS 3-2. This is because there is no overlapping period of the Paging Listening Intervals #1 and #2, in consideration of cases that the MS 3-1 has moved from the BS 1 area to the radio area 2a of the RS 2 during the idle mode and the MS 3-2 has not moved out of the radio area 2a of the RS 2, the MOB_PAG_ADV1 message must be transmitted, and in consideration of cases that the MS 3-1 has not moved out of the radio area 1a of the BS 1 and the MS 3-2 has moved from the RS 2 area to the radio area 1a of the BS 1, the MOB_PAG_ADV2 message must be transmitted.

That is, the MOB_PAG_ADV2 message transmitted by the BS 1 during Paging Listening Interval #1 (See a solid line arrow E1) cannot be received by the MS 3-1 that has moved from the BS 1 area to the radio area 2a of the RS 2 and the MS 3-2 that has not moved out of the radio area 2a of the RS 2 during Paging Listening Intervals #1 and #2 managed in each (See solid line arrows E3 and E4), but if the BS1 transmits the MOB_PAG_ADV1 message during Paging Listening Interval #2 managed in the BS 1 (See a solid line arrow E5), the MOB_PAG_ADV1 message will be received by both the MS 3-1 and MS 3-2 during Paging Listening Intervals #1 and #2 (See solid line arrows E7 and E8).

The MOB_PAG_ADV1 message transmitted by the BS 1 during Paging Listening Interval #2 cannot be received by the MS 3-1 that has not moved out of the radio area 1a of the BS 1 and the MS 3-2 that has moved from the RS 2 area to the radio area 1a of the BS 1 during Paging Listening Intervals #1 and #2 managed in each (See solid line arrows E5 and E6), but the MOB_PAG_ADV2 message transmitted by the BS 1 during Paging Listening interval #1 will be received during the Paging Listening Intervals #1 and #2 (See the solid line arrows E1 and E2).

That is, as shown in FIGS. 25 and 26, the minimum number of messages (MOB_PAG_ADV messages) required for a paging call when adjustments of the Paging Listening Interval in the BS 1 have been made changes depending on how much the Paging Listening Intervals #1 and #2 of the MS 3-1 and MS 3-2 managed in the BS1 overlap.

That is, if the Paging Listening Intervals #1 and #2 are longer than the time lag in the RS 2, as shown in the example of FIG. 25, a message like the MOB_PAG_ADV2 message needs to be transmitted only once during an overlapping period of the Paging Listening Intervals #1 and #2, if the Paging Listening Intervals #1 and #2 are equal to or shorter than the time lag in the RS 2, as shown in FIG. 26, the MOB_PAG_ADV1 message must be transmitted during Paging Listening Interval #2 and the MOB_PAG_ADV2 message must be transmitted during Paging Listening Interval #1.

Operations of the BS 1 shown in FIGS. 25 and 26 are realized in the configuration shown in FIG. 2 by determining the Paging Listening Intervals #1 and #2, which are receiving timings (receiving periods) for the MS 3 (the MS 3-1 after movement and the MS 3-2 before movement) communicating with the BS 1 via the RS 2 based on time lag information set as described above and also the Paging Listening Intervals #1 and #2, which are receiving timings (receiving periods) for the MS 3 (the MS 3-1 before movement and the MS 3-2 after movement) communicating directly with the BS 1 by the determination unit 14, and controlling the transmit timing of paging call messages in the BS 1 based on each of the determined Paging Listening Intervals #1 and #2 by the timing control unit 17.

That is, the determination unit 14 determines, after determining the Paging Listening Interval #2 (relay receiving timing) of the MS 3-2 performing communication via the RS 2, the Paging Listening Interval #1 (direct receiving timing) when a transition to a state occurs in which communication can be performed directly with the BS 1, and also determines, after determining the Paging Listening Interval #2 (direct receiving timing) of the MS 3-1 that can communicate directly with the BS 1, the Paging Listening Interval #1 (relay receiving timing) when a transition to a state occurs in which communication is performed via the RS 2.

Then, the timing control unit 17 can make the MS 3 to always receive paging call messages correctly by controlling [including control of the number of messages (number of times of transmission) based on how much the Paging Listening Intervals #1 and #2 overlap and the time lag] the transmit timing of the paging call messages of the BS 1 as shown in FIG. 25 or 26 based on each of these receiving timings, that is, each of the Paging Listening Intervals #1 and #2, regardless of movements of the MS 3 between the radio areas 1a and 2a during the idle mode.

### (A11.2) If the receiving timing (PLI) in the MS 3 has already been adjusted

### (a) If Paging Listening Interval is longer than the time lag in the RS 2

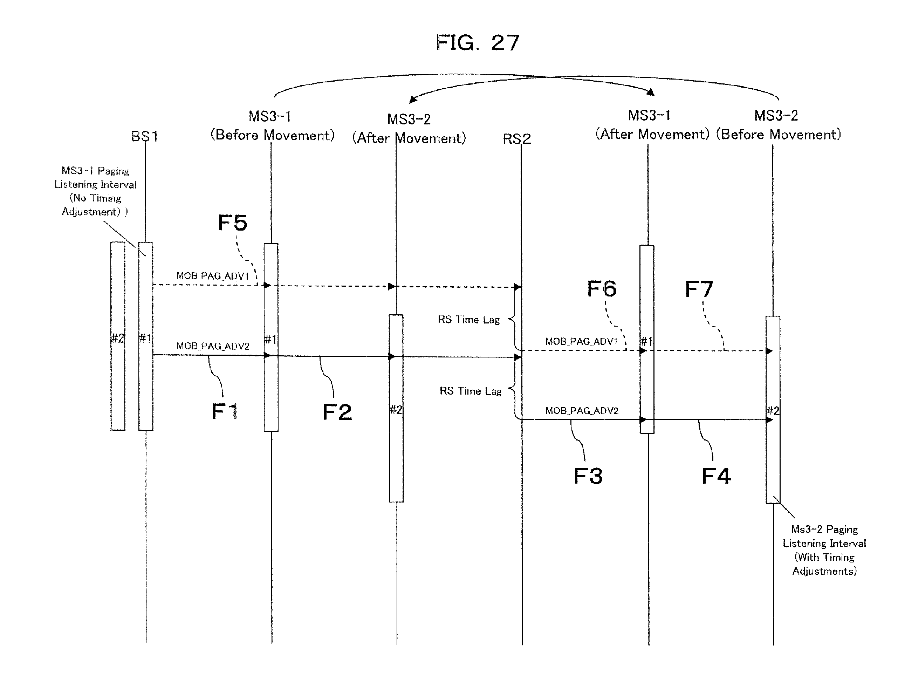

Next, FIG. 27 shows how paging call control is performed when the MS 3-1 and MS 3-2 move as shown in FIG. 24.

Since, as shown in FIG. 27, the MS 3-1 is directly connected to the BS 1 when transitioning to the idle mode, the BS 1 manages the normal Paging Listening Interval #1 for which no aforementioned timing adjustment has been made. Then, the Paging Listening Interval of the MS 3-1 in the BS 1 will be managed as the Paging Listening Interval #1 even after the MS 3-1 has moved to the radio area 2a of the RS 2 during the idle mode.

The MS 3-2, on the other hand, is connected to the BS 1 via the RS 2 when transitioning to the idle mode and thus the BS 1 manages the Paging Listening Interval #2 for which the aforementioned timing adjustment for the MS 3-2 has been made. The Paging Listening Interval #2 is the same as the Paging Listening Interval #1 regarding the transmit timing from the BS 1, but regarding the receiving timing in the MS 3-2, the Paging Listening Interval #2 is adjusted for a time lag in the RS 2.

That is, the receiving timing in the MS 3-2 is managed by being delayed by a time corresponding to a time lag due to relay processing in the RS 2 with respect to the receiving timing (Paging Listening Interval #1) of the MS 3-1. Thus, the receiving timing (Paging Listening Interval) of the MS 3-2 will be managed as the Paging Listening Interval #2 after the adjustments even after the MS 3-2 has moved to the radio area 1a of the BS 1 during the idle mode.

In the example shown in FIG. 27, the Paging Listening Intervals #1 and #2 (for example, three frames) are longer than the time lag in the RS 2 (for example, one frame). That is, the present example shows a case in which the Paging Listening Intervals #1 and #2 are longer than twice the time lag in the RS 2.

Also in this case, transmission of the MOB_PAG__ADV1 message or MOB _PAG _ADV2 message can be considered to make a paging call to the MS 3-1 or MS 3-2 respectively, but considering the aforementioned relationship of the length of the Paging Listening Intervals #1 (#2) and that of the time lag in the RS 2, as in the case of F1G. 25, there is no need to transmit the MOB_PAG_ADV1 message in this case (See a dotted line arrow F5) and the BS 1 only needs to transmit the MOB_PAG_ADV2 message as a common message.

That is, if at least the MOB_PAG_ADV2 message is transmitted while the Paging Listening Interval #1 and Paging Listening Interval #2 (two frames) managed in the BS 1 overlap (See a solid line arrow F1) even when the MS 3-1 moves from the radio area 1a of the BS 1 to the radio area 2a of the RS 2 during the idle mode, the MOB_PAG_ADV2 message can be received by the MS 3-1 after moving to the radio area 2a during Paging Listening Interval #1 managed in the MS 3-1 (See a solid line arrow F3) even if there is a time lag (one frame) in the RS 2. The MOB_PAG_ADV2 message can also be received correctly by the MS 3-2 that has not moved out of the radio area 2a of the RS 2 during Paging Listening Interval #2 (See a solid line arrow F4).

If, on the other hand, the MS 3-2 managing the Paging Listening Interval #2 has moved from the radio area 2a of the RS 2 to the radio area 1a at the BS 1 during the idle mode, the MOB_PAG_ADV2 message can still be received by the MS 3-2 after moving to the radio area 1a during Paging Listening Interval #2 (See a solid line arrow F2). The MOB_PAG_ADV2 message can also be received correctly by the MS 3-1 that has not moved out of the radio area 1a of the BS 1 during Paging Listening Interval #1 (See the solid line arrow F1).

That is, regardless of movements of the MS 3-1 or MS 3-2 between the radio areas 1a and 2a of the BS 1 and RS 2 respectively, the MS 3-1 and MS 3-2 can receive the MOB PAG_ADV2 message during Paging Listening Interval #1 and Paging Listening Interval #2 respectively. If the MOB_PAG_ADV1 message is also transmitted, the MOB_PAG_ADV1 message will be received by the MS 3-1 that has not moved out of the radio area 1a of the BS 1 or the MS 3-1 that has moved to the radio area 2a of the RS 2 during Paging Listening Interval #1 (See a dotted line arrow F6), and also by the MS 3-2 that has not moved out of the radio area 2a of the RS 2 during Paging Listening Interval #2 (See a dotted line arrow F7).

### (b) If Paging Listening Interval is twice as long as the time lag in the RS 2

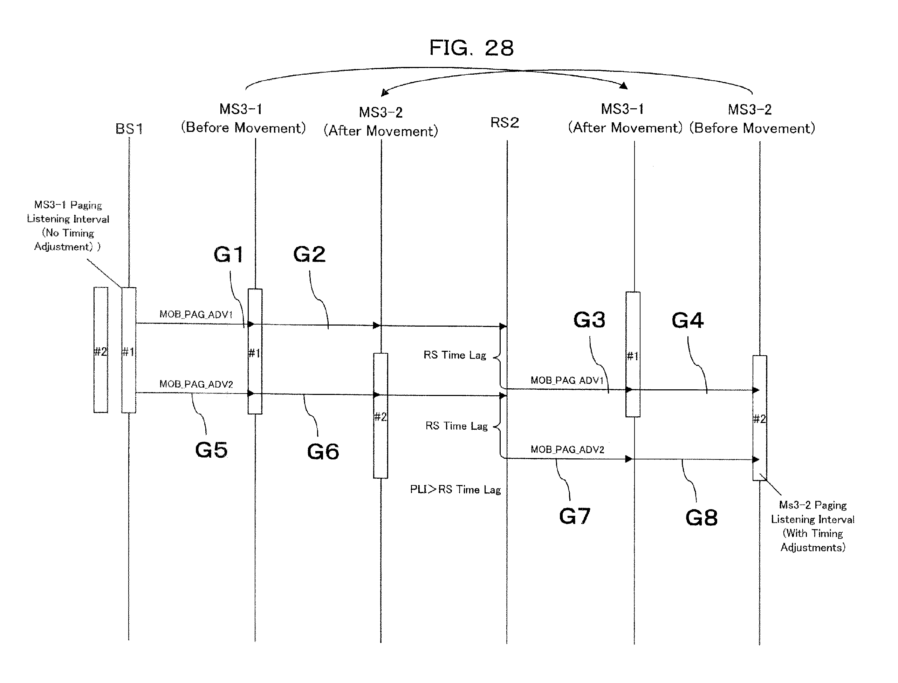

Next, FIG. 28 shows, like FIG. 27, how paging call control is performed when the MS 3-1 and MS 3-2 move. However, there is a difference in the example shown in FIG. 28 in the lengths of the time lag in the RS 2 and Paging Listening Interval from the example of FIG. 27. That is, in the example of FIG. 28, the Paging Listening Intervals (for example, two frames) are twice as long as the time lag (for example, one frame) in the RS 2.

In this case, like the example shown in FIG. 26, both the MOB_FAG_ADV1 message and MOB_PAG_ADV2 message must be transmitted to make a paging call to the MS 3-1 or MS 3-2. This is because no paging call can be made to the MS 3-2 only by the MOB PAG ADV1 message if the MS 3-2 moves from the radio area 2a of the RS 2 to the radio area 1a of the BS 1 (See solid line arrows G1 and G2), and no paging call can be made to the MS 3-1 only by the MOB_PAG_ADV2 message if the MS 3-1 moves from the radio area 1a of the BS 1 to the radio area 2a of the RS 2 (See a solid line arrow G7).

Therefore, by transmitting both the MOB_PAG_ADV1 message and MOB_PAG_ADV2 message during Paging Listening Intervals #1 and #2 managed in the MS 3-1 and MS 3-2, even when the MS 3-2 moves from the radio area 2a of the RS 2 to the radio area 1a of the BS 1, the MS 3-2 can receive the MOB_PAG_ADV2 message during Paging Listening Interval #2 (See a solid line arrow G6), though MS 3-2 cannot receive the MOB_PAG_ADV1 message (See a solid line arrow G2).

Also, even when the MS 3-1 moves from the radio area 1a of the BS 1 to the radio area 2a of the RS 2, the MS 3-1 can receive the 14CB_PAG_ADV1 message during Paging Listening Interval #1 (See a solid line arrow G3), though MS 3-2 cannot receive the MOB_PAG_ADV2 message (See a solid line arrow G7) .

Meanwhile, if the MS 3-1 has not moved out of the radio area 1a of the BS 1, the MS 3-1 will be able to receive both the MOB_PAG_ADV1 message and MOB_PAG_ADV2 message during Paging Listening Interval #1 (See the solid line arrows G1 and G5), and if the MS 3-2 has not moved out of the radio area 2a of the RS 2, the MS 3-2 will be able to receive both the MOB_PAG_ADV1 message and MOB_PAG_ADV2 message during Paging Listening Interval #2 (See solid line arrows G4 and G8).

### (c) If the time lag in the RS 2 is as long as Paging Listening Interval

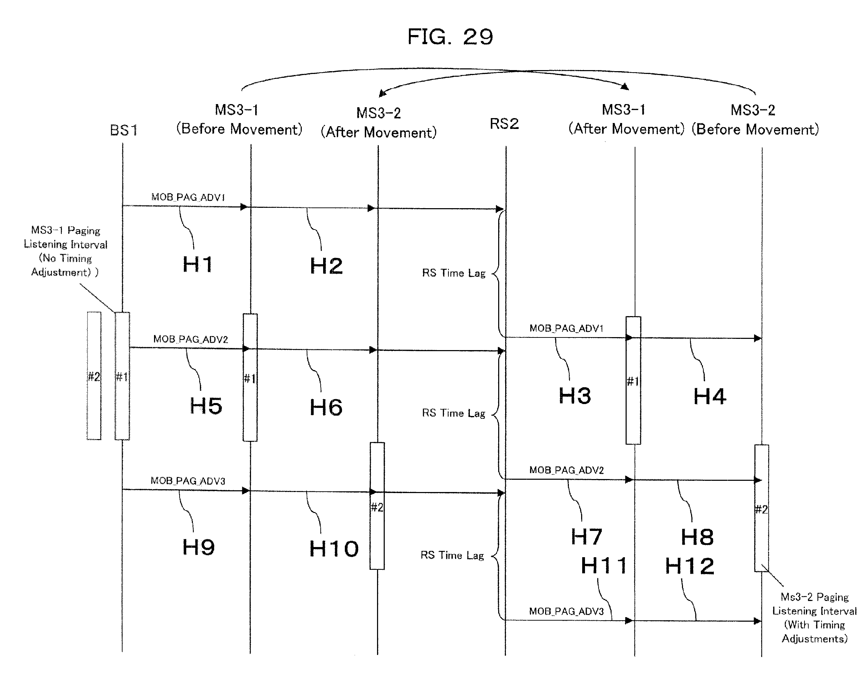

Next, FIG. 29 shows, like FIG. 27, how paging call control is performed when the MS 3-1 and MS 3-2 move after transitioning to the idle mode as shown in FIG. 24. However, there is a difference in the lengths of the time lag in the RS 2 and Paging Listening Interval from the example of FIG. 27. That is, in the example of FIG. 29, the Paging Listening Intervals #1 and #2 (for example, two frames) are as long as the time lag (for example, two frames) in the RS 2.

This is because the MOB_PAG_ADV1 message must be transmitted in a case when the MS 3-1 has moved from the radio area 1a of the BS 1 to the radio area 2a of the RS 2, the MOB_PAG_ADV2 message must be transmitted in a case when the MS 3-1 has not moved out of the radio area 1a of the BS 1 or the MS 3-2 has not moved out of the radio area 2a of the RS 2, and a MOB_PAG_ADV3 message must be transmitted in a case when the MS 3-2 has moved from the radio area 2a of the RS 2 to the radio area 1a of the BS 1.

That is, if the MS 3-1 has not moved out of the radio area 1a of the BS 1, the MS 3-1 can receive the MOB_PAG_ADV2 message during Paging Listening Interval #1 (See a solid line arrow H5), though the BS 3-1 cannot receive the MOB_PAG _ADV1 message and MOB_PAG_ADV3 message (See solid line arrows H1 and H9), and if the MS 3-1 has moved to the radio area 2a of the RS 2 during the idle mode, though the MOB PAG ADV2 message cannot be received (the MOB_PAG_ADV3 message cannot be received even before movement) during Paging Listening Interval #1 (See solid line arrows H7 and H11), but instead the MOB_PAG_ADV1 message can be received (See a solid line arrow H3).

If, on the other hand, the MS 3-2 has not moved out of the radio area 2a of the RS 2, the MS 3-2 can receive the MOB_PAG_ADV2 message during Paging Listening Interval #2 (See a solid line arrow H8), though the BS 3-2 cannot receive the MOB_PAG_ADV1 message and MOB_PAG_ADV3 message (See solid line arrows H4 and H12), and if the MS 3-2 has moved to the radio area 1a of the BS 1 during the idle mode, though the MOB_PAG_ADV2 message cannot be received (the MOB_PAG_ADV1 message cannot be received even before movement) during Paging Listening Interval #2 (See solid line arrows H6 and H2), but instead the MOB_PAG_ADV3 message can be received (See a solid line arrow H10).

When the receiving timing in the MS 3 is controlled, as in the examples shown in FIGS. 27 to 29, the minimum number of MOB PAG ADV messages required for a paging call changes depending on how much the Paging Listening Intervals #1 and #2 of the MS 3 managed in the BS 1 overlap.

That is, if the Paging Listening Interval is longer than twice the time lag in the RS 2 (in other words, a difference between the Paging Listening Interval and the time lag in the RS 2 is longer than the time lag in the RS 2), as shown in FIG. 27, a message only needs to be transmitted at least once like the MOB_PAG_ADV2 message between the last timing when the Paging Listening Intervals #1 and #2 overlap and a timing before the time lag in the RS 2.

If the Paging Listening Intervals #1 and #2 are longer than the time lag in the RS 2 and equal to or shorter than twice the time lag in the RS 2, as shown in FIG. 28, a message must be transmitted at least twice like the MOB_PAG_ADV1 message and MOB_PAG_ADV2 message. Further, if the Paging Listening Intervals #1 and #2 are equal to or shorter than the time lag in the RS 2, as shown in FIG. 29, a message must be transmitted at least three times like the MOB_PAG_ADV1 message to message.

Operations of the BS 1 shown in FIGS. 27 to 29 are also realized in the configuration shown in FIG. 2 by determining the Paging Listening Intervals #1 and #2, which are receiving timings (receiving periods) for the MS 3 (the MS 3-1 after movement and the MS 3-2 before movement) communicating with the BS 1 via the RS 2 based on time lag information set as described above and also the Paging Listening Intervals #1 and #2, which are receiving timings (receiving periods) for the MS 3 (the MS 3-1 before movement and the MS 3-2 after movement) communicating directly with the BS 1 by the determination unit 14, and controlling the transmit timing of paging call messages in the BS 1 based on each of the determined Paging Listening Intervals #1 and #2 by the timing control unit 17.

That is, the determination unit 14 determines, after determining the Paging Listening Interval #2 (relay receiving timing) of the MS 3-2 performing communication via the RS 2, the Paging Listening Interval #1 (direct receiving timing) when a transition to a state occurs in which communication can be performed directly with the BS 1, and also determines, after determining the Paging Listening Interval #2 (direct receiving timing) of the MS 3-1 that can communicate directly with the BS 1, the Paging Listening Interval #1 (relay receiving timing) when a transition to a state occurs in which communication is performed via the RS 2.

Then, the timing control unit 17 can make the MS 3 to always receive paging call messages correctly by controlling [including control of the number of messages (number of times of transmission) based on how much the Paging Listening Intervals #1 and #2 overlap and the time lag] the transmit timing of the paging call messages of the BS 1 as shown FIG. 27 to 29 based on each of these receiving timings, that is, each of the Paging Listening Intervals #1 and #2, regardless of movements of the MS 3 between the radio areas 1a and 2a during the idle mode.

It is assumed in the paging call control described with reference to FIGS. 24 to 29 that the Paging Listening Intervals #1 and #2 are fixed, but as described with reference to FIGS. 25 and 27, the Paging Listening Intervals #1 and #2 may be set and controlled to increase the overlapping period so that the number of times of paging call message transmission can be reduced to a minimum.

### [B] Additions

### (Addition 1)

A radio relay communication method in a radio communication system having a radio base station, a mobile station, and a radio relay station relaying communication between the radio base station and the mobile station, comprising the steps of:
setting time lag information related to a relay delay due to relay processing in the radio relay station to the radio base station;
determining a receiving timing of the mobile station based on the time lag information; and
controlling a transmit timing of the radio base station or the receiving timing of the mobile station according to the receiving timing determined in the determination step.

### (Addition 2)

A radio relay communication method in a radio communication system having a radio base station, a mobile station, and a radio relay station relaying communication between the radio base station and the mobile station, comprising the steps of:
setting time lag information related to a relay delay due to relay processing in the radio relay station to the radio base station;
determining a transmit timing of the mobile station based on the time lag information; and
controlling a receiving timing of the radio base station or the transmit timing of the mobile station according to the transmit timing determined in the determination step.

### (Addition 3)

The radio relay communication method in a radio communication system according to Addition 1 or 2, wherein
in the setting step,
the time lag information notified from the radio relay station is set.

### (Addition 4)

The radio relay communication method in a radio communication system according to Addition 1 or 2, wherein
in the setting step,
the radio base station sets the time lag information notified from the radio relay station in response to the inquiry about the time lag information to the radio relay station.

### (Addition 5)

The radio relay communication method in a radio communication system according to any of Additions 1 to 4, wherein
a plurality of the radio relay stations are connected in series by radio between the radio base station and the mobile station and
the radio base station or each of the radio relay stations retains a cumulative value of the time lag information of the radio relay stations on a side of the mobile station from a local station.

### (Addition 6)

The radio relay communication method in a radio communication system according to Addition 5, wherein for retention of the cumulative value of the time lag information, the radio relay station notifies the radio base station or other radio relay stations on the side of the radio base station from the local station of the cumulative value of the time lag information.

### (Addition 7)

The radio relay communication method in a radio communication system according to Addition 5, wherein for retention of the cumulative value of the time lag information, the radio base station or radio relay station makes an inquiry about the cumulative value of the time lag information to a radio relay station on the side of the mobile station from the local station.

### (Addition 8)

A radio relay communication method in a radio communication system having a radio base station, a mobile station, and a radio relay station relaying communication between the radio base station and the mobile station, comprising the steps of:
receiving a radio frame transmitted by the radio base station, another radio relay station, or the mobile station;
detecting a frame number of the radio frame received in the reception step;
generating a radio frame to which the frame number detected in the detection step is set; and
relay-transmitting the radio frame generated in the frame generation step.

### (Addition 9)

A radio relay communication method in a radio communication system having a radio base station, a mobile station, and a radio relay station relaying communication between the radio base station and the mobile station, comprising the steps of:
setting time lag information related to a relay delay due to relay processing in the radio relay station to the radio base station;
determining a transmit timing of the radio relay station based on the time lag information;
notifying the radio relay station of the transmit timing determined in the determination step; and
relay-transmitting by the radio relay station according to the transmit timing notified in the notification step.

### (Addition 10)

The radio relay communication method in a radio communication system according to Addition 9, wherein the radio relay station receives a notification in the notification step in response to the inquiry about the transmit timing made to the radio base station.

### (Addition 11)

A radio base station in a radio communication system having a radio base station, a mobile station, and a radio relay station relaying communication between the radio base station and the mobile station, comprising:
a retention means retaining time lag information related to a relay delay due to relay processing in the radio relay station;
a determination means determining a receiving timing of the mobile station based on the time lag information retained by the retention means; and
a timing control means controlling a transmit timing of a local station or the receiving timing of the mobile station according to the receiving timing determined by the determination means.

### (Addition 12)

A radio base station in a radio communication system having a radio base station, a mobile station, and a radio relay station relaying communication between the radio base station and the mobile station, comprising:
a retention means retaining time lag information related to a relay delay due to relay processing in the radio relay station;
a determination means determining a transmit timing of the mobile station based on the time lag information retained by the retention means; and
a timing control means controlling a receiving timing of a local station or the transmit timing of the mobile station according to the transmit timing determined by the determination means.

### (Addition 13)

The radio base station in a radio communication system according to Addition 11 or 12, wherein the retention means retains the time lag information in the radio relay station notified from the radio relay station.

### (Addition 14)

The radio base station in a radio communication system according to Addition 11 or 12, comprising :
a request means making an inquiry about the time lag information in the radio relay station to the radio relay station, wherein
the time lag information notified from the radio relay station in response to the inquiry by the request means is retained by the retention means.

### (Addition 15)

A radio relay station in a radio communication system having a radio base station, a mobile station, and a radio relay station relaying communication between the radio base station and the mobile station, comprising:
a reception means receiving a radio frame transmitted by the radio base station, another radio relay station, or the mobile station;
a detection means detecting a frame number of the radio frame received by the reception means;
a generation means generating a radio frame to which the frame number detected in the detection means is set; and
a transmission means relay-transmitting the radio frame generated by the frame generation means.

### (Addition 16)

A radio relay station in a radio communication system having a radio base station, a mobile station, and a radio relay station relaying communication between the radio base station and the mobile station in which a plurality of the radio relay stations are connected in series by radio between the radio base station and the mobile station, comprising:
a retention means retaining a cumulative value of the time lag information of other radio relay stations on a side of the mobile station from a local station.

### (Addition 17)

The radio relay station in a radio communication system according to Addition 16, further comprising a notification means notifying the radio base station or other radio relay stations on the side of the radio base station from the local station of the cumulative value of the time lag information.

### (Addition 18)

The radio relay station in a radio communication system according to Addition 16, further comprising:
a request means making an inquiry about the cumulative value of the time lag information to other radio relay stations on the side Of the mobile station from the local station, wherein
the cumulative value of the time lag information notified in response to the inquiry by the request means is retained in the retention means.

### (Addition 19)

A radio relay station in a radio communication system having a radio base station, a mobile station, and a radio relay station relaying communication between the radio base station and the mobile station, comprising:
a reception means receiving a notification of a transmit timing for a local station determined by the radio base station based on time lag information related to a relay delay due to relay processing in the local station; and
a transmission means relay-transmitting according to the transmit timing received by the reception means.

### (Addition 20)

A radio base station in a radio communication system having a radio base station, a mobile station, and a radio relay station relaying communication between the radio base station and the mobile station, comprising:
a retention means retaining time lag information related to a relay delay due to relay processing in the radio relay station;
a determination means determining a transmit timing of the radio relay station based on the time lag information retained by the retention means; and
a notification means notifying the radio relay station of the transmit timing determined by the determination means to cause the radio relay station to relay-transmit according to the transmit timing determined by the determination means.

### (Addition 21)

The radio base station in a radio communication system according to Addition 20, wherein
the determination means
determines the transmit timing upon receiving an inquiry about the transmit timing from the radio relay station.

### (Addition 22)

A radio relay communication method in a radio communication system having a radio base station, a mobile station, and a radio relay station relaying communication between the radio base station and the mobile station, comprising the steps of:
setting time lag information related to a relay delay due to relay processing in the radio relay station the radio base station;
determining a relay receiving timing in the mobile station communicating with the radio base station via the radio relay station based on the time lag information and also a direct receiving timing in the mobile station communicating directly with the radio base station; and
controlling a transmit timing of a message to be received by the mobile station based on each of the receiving timings determined in the determination step.

### (Addition 23)

The radio relay communication method in a radio communication system according to Addition 22, wherein
in the determination step,
after determining the relay receiving timing for the mobile station communicating via the radio relay station, the direct receiving timing when a transition to a state occurs in which communication can be performed directly with the radio base station is determined, and
in the control step,
the transmit timing of the message is controlled based on each of the receiving timings.

### (Addition 24)

The radio relay communication method in a radio communication system according to Addition 22 or 23, wherein
in the determination step,
after determining the direct receiving timing for the mobile station that can communicate directly with the radio base station, the relay receiving timing when a transition to a state occurs in which communication is performed via the radio relay station is determined, and
in the control step,
the transmit timing of the message is controlled based on each of the receiving timings.

### (Addition 25)

The radio relay communication method in a radio communication system according to Addition 23 or 24, wherein
in the determination step,
each of the receiving timings is determined as a receiving period and
in the control step,
the transmit timing of the message is controlled based on how much each of the receiving periods is overlapped and the relay delay.

### (Addition 26)

The radio relay communication method in a radio communication system according to Addition 25, wherein
in the control step,
if the receiving periods are longer than the relay delay, the transmit timing is controlled so that the transmission message is transmitted at least once in an overlapping period of the receiving periods.

### (Addition 27)

The radio relay communication method in a radio communication system according to Addition 25, wherein
the control step,
if the relay delay is equal to or longer than the receiving periods, the transmit timing is controlled so that the transmission message is transmitted at least once in each of the receiving periods.

### (Addition 28)

A radio base station in a radio communication system having a radio base station, a mobile station, and a radio relay station relaying communication between the radio base station and the mobile station, comprising:
a setting means setting time lag information related to a relay delay due to relay processing in the radio relay station to the radio base station;
a determination means determining a relay receiving timing in the mobile station communicating with the radio base station via the radio relay station based on the time lag information and also a direct receiving timing in the mobile station communicating directly with the radio base station; and
a control means controlling a transmit timing of messages to be received by the mobile station based on each of the receiving timings determined by the determination means.

### (Addition 29)

The radio base station in a radio communication system according to Addition 28, wherein
the determination means
determines, after determining the relay receiving timing for the mobile station communicating via the radio relay station, the direct receiving timing when a transition to a state occurs in which communication can be performed directly with the radio base station, and
the control means
controls the transmit timing of the message based on each of the receiving timings determined by the determination means.

### (Addition 30)

The radio base station in a radio communication system according to Addition 28 or 29, wherein
the determination means
determines, after determining the direct receiving timing for mobile stations that can directly communicate with the radio base station via the radio relay station, the relay receiving timing for mobile stations when a transition to a state occurs in which the mobile station communicates with the radio base station via the radio relay station, and
the control means
controls the transmit timing of the message based on each of the receiving timings determined by the determination means.

### (Addition 31)

The radio base station in a radio communication system according to Addition 29 or 30, wherein
the determination means
determines each of the receiving timings as a receiving period and
the control means
controls the transmit timing of the message based on how much each of the receiving periods is overlapped and the relay delay.

### (Addition 32)

The radio base station in a radio communication system according to Addition 31, wherein
the control means
controls the transmit timing, if the receiving periods are longer than the relay delay, so that the transmission message is transmitted at least once in an overlapping period of the receiving periods.

### (Addition 33)

The radio base station in a radio communication system according to Addition 31, wherein
the control means
controls the transmit timing, if the relay delay is equal to or longer than the receiving periods, so that the transmission message is transmitted at least once in each of the receiving periods.

As described above in detail, according to the present invention, since a receiving timing shift in a radio base station or mobile station accompanying a relay delay caused by passing through a radio relay station can be absorbed to improve the ratio of successful reception, communication quality can be ensured while improving the utilization efficiency of radio resources, and thus the present invention can be considered to be extremely useful in the field of radio communication technology.

As this invention may be embodied in several forms without departing from the spirit of essential characteristics thereof, the present embodiments are therefore illustrative and not restrictive, since the scope of the invention is defined by the appended claims rather than the description preceding them, and all changes that fall within metes and bounds of the claims, or equivalence of such and bounds thereof are therefore intended to be embraced by the claims.

## Claims

1. A radio relay communication method in a radio communication system having a radio base station (1), a mobile station (3), and a radio relay station (2) relaying communication between the radio base station (1) and the mobile station (3), comprising the steps of:
setting time lag information related to a relay delay due to relay processing in the radio relay station (2) to the radio base station (1);
determining a receiving timing of the mobile station (3) based on the time lag information; and
controlling a transmit timing of the radio base station (1) or the receiving timing of the mobile station (3) according to the receiving timing determined in the determination step.

2. A radio relay communication method in a radio communication system having a radio base station (1), a mobile station (3), and a radio relay station (2) relaying communication between the radio base station (1) and the mobile station (3), comprising the steps of:
setting time lag information related to a relay delay due to relay processing in the radio relay station (2) to the radio base station (1);
determining a transmit timing of the mobile station (3) based on the time lag information; and
controlling a receiving timing of the radio base station (1) or the transmit timing of the mobile station (3) according to the transmit timing determined in the determination step.

3. A radio relay communication method in a radio communication system having a radio base station (1), a mobile station (3), and a radio relay station (2) relaying communication between the radio base station (1) and the mobile station (3), comprising the steps of:
receiving a radio frame transmitted by the radio base station (1), another radio relay station (2), or the mobile station (3);
detecting a frame number of the radio frame received in the reception step;
generating a radio frame to which the frame number detected in the detection step is set; and
relay-transmitting the radio frame generated in the frame generation step.

4. A radio relay communication method in a radio communication system having a radio base station (1), a mobile station (3), and a radio relay station (2) relaying communication between the radio base station (1) and the mobile station (3), comprising the steps of:
setting time lag information related to a relay delay due to relay processing in the radio relay station (2) to the radio base station (1);
determining a transmit timing of the radio relay station (2) based on the time lag information;
notifying the radio relay station (2) of the transmit timing determined in the determination step; and
relay-transmitting by the radio relay station (2) according to the transmit timing notified in the notification step.

5. The radio relay communication method in a radio communication system according to claim 4, wherein the radio relay station (2) receives a notification in the notification step in response to the inquiry about the transmit timing made to the radio base station (1).

6. A radio base station in a radio communication system having a radio base station (1), a mobile station (3), and a radio relay station (2) relaying communication between the radio base station (1) and the mobile station (3), comprising:
a retention means (18) retaining time lag information related to a relay delay due to relay processing in the radio relay station (2);
a determination means (14) determining a receiving timing of the mobile station (3) based on the time lag information retained by the retention means (18); and
a timing control means (17) controlling a transmit timing of a local station (1) or the receiving timing of the mobile station (3) according to the receiving timing determined by the determination means (14).

7. A radio base station in a radio communication system having a radio base station (1), a mobile station (3), and a radio relay station (2) relaying communication between the radio base station (1) and the mobile station (3), comprising:
a retention means (18) retaining time lag information related to a relay delay due to relay processing the radio relay station (2);
a determination means (14) determining a transmit timing of the mobile station (3) based on the time lag information retained by the retention means (18); and
a timing control means (17) controlling a receiving timing of a local station (1) or the transmit timing of the mobile station (3) according to the transmit timing determined by the determination means (14).

8. A radio relay station in a radio communication system having a radio base station (1), a mobile station (3), and a radio relay station (2) relaying communication between the radio base station (1) and the mobile station (3), comprising:
a reception means (21) receiving a radio frame transmitted by the radio base station (1), another radio relay station (2), or the mobile station (3);
a detection means (24) detecting a frame number of the radio frame received by the reception means (21);
a generation means (221) generating a radio frame to which the frame number detected in the detection means (24) is set; and
a transmission means (22) relay-transmitting the radio frame generated by the frame generation means (221).

9. A radio relay station in a radio communication system having a radio base station (1), a mobile station (3), and a radio relay station (2) relaying communication between the radio base station (1) and the mobile station (3) in which a plurality of the radio relay stations (2) are connected in series by radio between the radio base station (1) and the mobile station (3), comprising:
a retention means (27) retaining a cumulative value of the time lag information of other radio relay stations (2) on a side of the mobile station (3) from a local station (2).

10. The radio relay station in a radio communication system according to claim 9, further comprising a notification means (28) notifying the radio base station (1) or other radio relay stations (2) on the side of the radio base station (1) from the local station (2) of the cumulative value of the time lag information.

11. The radio relay station (2) in a radio communication system according to claim 9, further comprising:
a request means (25) making an inquiry about the cumulative value of the time lag information to other radio relay stations (2) on the side of the mobile station (3) from the local station (2), wherein
the cumulative value of the time lag information notified in response to the inquiry by the request means (25) is retained in the retention means (27).

12. A radio relay station in a radio communication system having a radio base station (1), a mobile station (3), and a radio relay station (2) relaying communication between the radio base station (1) and the mobile station (3), comprising:
a reception means (21) receiving a notification of a transmit timing for a local station (2) determined by the radio base station (1) based on time lag information related to a relay delay due to relay processing in the local station (2); and
a transmission means (22) relay-transmitting according to the transmit timing received by the reception means (21).

13. A radio base station in a radio communication system having a radio base station (1), a mobile station (3), and a radio relay station (2) relaying communication between the radio base station (1) and the mobile station (3), comprising:
a retention means (18) retaining time lag information related to a relay delay due to relay processing in the radio relay station (2);
a determination means (14) determining a transmit timing of the radio relay station (2) based on the time lag information retained by the retention means (18); and
a notification means (16) notifying the radio relay station (2) of the transmit timing determined by the determination means (14) to cause the radio relay station (2) to relay-transmit according to the transmit timing determined by the determination means (14).

14. The radio base station in a radio communication system according to claim 13, wherein
the determination means (14)
determines the transmit timing upon receiving an inquiry about the transmit timing from the radio relay station (2).

15. A radio relay communication method in a radio communication system having a radio base station (1), a mobile station (3), and a radio relay station (2; relaying communication between the radio base station 1) and the mobile station (3), comprising the steps of:
setting time lag information related to a relay delay dae to relay processing in the radio relay station (2) to the radio base station (1);
determining a relay receiving timing in the mobile station (3) communicating with the radio base station (1) via the radio relay station (2) based on the time lag information and also a direct receiving timing in the mobile station (3) communicating directly with the radio base station (1); and
controlling a transmit timing of a message to be received by the mobile station (3) based on each of the receiving timings determined in the determination step.

16. The radio relay communication method in a radio communication system according to claim 15, wherein
in the determination step,
after determining the relay receiving timing for the mobile station (3) communicating via the radio relay station (2), the direct receiving timing when a transition to a state occurs in which communication can be performed directly with the radio base station (1) is determined, and
in the control step,
the transmit timing of the message is controlled based on each of the receiving timings.

17. A radio base station in a radio communication system having a radio base station (1), a mobile station (3), and a radio relay station (2) relaying communication between the radio base station (1) and the mobile station (3), comprising:
a setting means setting time lag information related to a relay delay (2) due to relay processing in the radio relay station (2) to the radio base station (1);
a determination means (14) determining a relay receiving timing in the mobile station (3) communicating with the radio base station (1) via the radio relay station (2) based on the time lag information and also a direct receiving timing in the mobile station (3) communicating directly with the radio base station (1); and
a control means (17) controlling a transmit timing of messages to be received by the mobile station (3) based on each of the receiving timings determined in the determination means (14).

18. The radio base station in a radio communication system according to claim 17, wherein
the determination means (14)
determines, after determining the relay receiving timing for the mobile station (3) communicating via the radio relay station (2), the direct receiving timing when a transition to a state occurs in which communication can be performed directly with the radio base station (1), and
the control means (17)
controls the transmit timing of the message based on each of the receiving timings determined by the determination means (14).
